(19) Europäisches Patentamt
European Patent Office
Office européen des brevets

(11) **EP 2 845 195 B1**

(12) **EUROPÄISCHE PATENTSCHRIFT**


(45) Veröffentlichungstag und Bekanntmachung des Hinweises auf die Patenterteilung:
**13.07.2016 Patentblatt 2016/28**

(21) Anmeldenummer: **13719545.9**

(22) Anmeldetag: **29.04.2013**

(51) Int Cl.:
***G11B 7/245*** *(2006.01)* ***G11B 7/24*** *(2006.01)*
***G11B 7/0065*** *(2006.01)*

(86) Internationale Anmeldenummer:
**PCT/EP2013/058926**

(87) Internationale Veröffentlichungsnummer:
**WO 2013/164317 (07.11.2013 Gazette 2013/45)**


(54) **NEUE PHOTOINITIATOREN FÜR PHOTOPOLYMERE**

NEW PHOTOINITIATORS FOR PHOTOPOLYMERS

NOUVEAUX PHOTO-INITIATEURS POUR PHOTOPOLYMÈRES


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2012 EP 12166555**

(43) Veröffentlichungstag der Anmeldung:
**11.03.2015 Patentblatt 2015/11**



(73) Patentinhaber: **Covestro Deutschland AG**
**51373 Leverkusen (DE)**

(72) Erfinder:
- **RÖLLE, Thomas**
  **51381 Leverkusen (DE)**
- **BERNETH, Horst**
  **51373 Leverkusen (DE)**
- **BRUDER, Friedrich-Karl**
  **47802 Krefeld (DE)**
- **FÄCKE, Thomas**
  **51375 Leverkusen (DE)**
- **WEISER, Marc-Stephan**
  **51377 Leverkusen (DE)**
- **HÖNEL, Dennis**
  **53909 Zülpich-Wichterich (DE)**

(74) Vertreter: **Levpat**
**c/o Covestro AG**
**Alfred-Nobel-Straße 10**
**40789 Monheim am Rhein (DE)**



(56) Entgegenhaltungen:
**WO-A1-2008/125229** **WO-A1-2011/054795**
**JP-A- 2000 039 716** **JP-A- 2005 189 256**
**US-B1- 7 052 812**

- **LOUDET A ET AL: "BODIPY dyes and their derivatives: Syntheses and spectroscopic properties", CHEMICAL REVIEWS, AMERICAN CHEMICAL SOCIETY, US, Bd. 107, Nr. 11, 1. Januar 2007 (2007-01-01), Seiten 4891-4932, XP002547571, ISSN: 0009-2665, DOI: 10.1021/CR078381N [gefunden am 2007-10-09]**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


EP 2 845 195 B1

Printed by Jouve, 75001 PARIS (FR)

## Beschreibung

Die vorliegende Erfindung betrifft neue Photopolymer-Formulierung umfassend eine Polyol-Komponente, eine Polyisocyanat-Komponente, ein Schreibmonomer und einen Photoinitiator umfassend einen Farbstoff der Formel (I). Weitere Gegenstände der Erfindung sind ein holographisches Medium, das eine erfindungsgemäße Photopolymer-Fonnulierung enthält oder unter deren Verwendung erhältlich ist, die Verwendung einer erfindungsgemäßen Photopolymer-Formulierung zur Herstellung holographischer Medien sowie ein Verfahren zur Herstellung eines holographischen Mediums unter Verwendung einer erfindungsgemäßen Photopolymer-Formulierung. Photopolymer-Formulierungen der eingangs genannten Art sind im Stand der Technik bekannt. So ist beispielsweise in der WO 2008/125229 A1 eine Photopolymer-Formulierung beschrieben, die eine Polyol-Komponente, eine Polyisocyanat-Komponente, ein Schreibmonomere auf Acrylatbasis sowie Photoinitiatoren enthaltend einen Coinitiator und einen Farbstoff umfasst. Im ausgehärtetem Zustand sind in der aus Polyol- und Polyisocyanat-Komponente gebildeten Polyurethanmatrix das Schreibmonomer und die Photoinitiatoren räumlich isotrop verteilt eingebettet.

WO 2001/054794 A offenbart holographische Photopolymerformulierungen, die im Unterschied zum Gegenstand der Erfindung Photoinitiatorsysteme mit unterschiedlichen Farbstoffen verwenden Für die Verwendungen von Photopolymer-Formulierungen spielt die durch die holographische Belichtung im Photopolymer erzeugte Brechungsindexmodulation $\Delta n$ die entscheidende Rolle. Bei der holographischen Belichtung wird das Interferenzfeld aus Signal- und Referenzlichtstrahl (im einfachsten Fall das zweier ebener Wellen) durch die lokale Photopolymerisation von z.B. hochbrechenden Acrylate an Orten hoher Intensität im Interferenzfeld in ein Brechungsindexgitter abgebildet. Das Brechungsindexgitter im Photopolymeren (das Hologramm) enthält alle Information des Signallichtstrahls. Durch Beleuchtung des Hologramms nur mit dem Referenzlichtstrahl kann dann das Signal wieder rekonstruiert werden. Die Stärke des so rekonstruierten Signals im Verhältnis zur Stärke des eingestrahlten Referenzlichts wird Beugungseffizienz, im Folgenden DE wie Diffraction Efficiency, genannt.

Im einfachsten Fall eines Hologramms, das aus der Überlagerung zweier ebener Wellen entsteht ergibt sich die DE aus dem Quotienten der Intensität des bei der Rekonstruktion abgebeugten Lichtes und der Summe der Intensitäten aus nicht gebeugten und abgebeugtem Licht. Je höher die DE desto effizienter ist ein Hologramm in Bezug auf die Lichtmenge des Referenzlichtes die notwendig ist, um das Signal mit einer festen Helligkeit sichtbar zu machen.

Bei Beleuchtung des Hologramms mit z.B. weißem Licht hängt die Breite des spektralen Bereiches, der zur Rekonstruktion des Hologramms beitragen kann, ebenfalls nur von der Schichtdicke d ab. Dabei gilt: je kleiner d desto größer die jeweiligen Akzeptanzbreiten. Will man daher helle und leicht sichtbare Hologramme herstellen, ist ein hohes $\Delta n$ und eine geringe Dicke d anzustreben und zwar so, dass DE möglichst groß wird. Das heißt, je höher $\Delta n$ wird, desto mehr Freiraum zur Gestaltung der Schichtdicke d für helle Hologramme erreicht man ohne Verlust an DE. Daher kommt der Optimierung von $\Delta n$ bei der Optimierung von Photopolymer-Formulierungen eine herausragenden Bedeutung zu (P. Hariharan, Optical Holography, 2nd Edition, Cambridge University Press, 1996).

Um ein möglichst hohes $\Delta n$ und DE bei Hologrammen realisieren zu können, sollten grundsätzlich die Matrixpolymere und die Schreibmonomere einer Photopolymer-Formulierung so gewählt werden, dass sie sich in ihren Brechungsindizes möglichst stark unterscheiden. Ein Möglichkeit zur Realisierung ist, Matrixpolymere mit einem möglichst niedrigen und Schreibmonomere mit einem möglichst hohen Brechungsindex zu verwenden. Geeignete Matrixpolymere mit niedrigem Brechungsindex sind beispielsweise durch Umsetzung einer Polyol- mit einer Polyisocyanat-Komponente erhältliche Polyurethane.

Neben hohen DE- und $\Delta n$- Werten ist es für holographische Medien aus Photopolymer-Formulierungen aber auch von großer Bedeutung, dass die Matrixpolymere im fertigen Medium hoch vernetzt sind. Falls der Vemetzungsgrad zu niedrig ist, weist das Medium keine ausreichende Stabilität auf. Dies kann dazu führen, dass die Qualität von in die Medien eingeschriebenen Hologrammen erheblich vermindert ist. Im schlimmsten Fall können die Hologramme sogar nachträglich zerstört werden.

Weiterhin ist es insbesondere für die großtechnische Herstellung von holographischen Medien aus Photopolymer-Formulierungen von großer Bedeutung, dass die Vernetzung der Matrixpolymere schnell erfolgt. So sind hier eine kurze Aushärtezeiten bis zum Erreichen der Blockfestigkeit von großer Bedeutung, da durch diese Größe die Verarbeitungsgesclvwindigkeit bzw. die Länge einer nötigen Härtungsstrecke bestimmt wird.

Enthält die Photopolymer-Formulierung beispielsweise Komponenten mit einer hohen Wasseraufnahmefähigkeit, kann dies den Vernetzungsgrad deutlich verringern, da das Wasser mit den vorhandenen Isocyanatgruppen abreagiert und diese für die Vernetzungsreaktion nicht mehr zur Verfügung stehen. Ionische Farbstoffe weisen in der Regel eine signifikante Wasseraufnahmefähigkeit auf, so dass bei Einsatz solcher Farbstoffe in der Photopolymer-Formulierung diese Problematik entsteht. Der Einsatz ionischer Farbstoff in Photopolymer-Formulierungen ist aber in der Literatur vielfach bevorzugt, da solche Farbstoffe eine deutlich höhere holographische Aktivität aufweisen.

Die Aufgabe der vorliegenden Erfindung bestand daher darin, eine Photopolymer-Formulierung bereit zu stellen, mit denen sich ein ausreichender Vernetzungsgrad der Matrixpolymere in kurzen Aushärtungszeiten erzielen lässt und mit der zudem stabile holographische Medien für helle Hologramme hergestellt werden können.

Überraschend wurde gefunden, dass schnell härtende holographische Medien aus Photopolymer-Formulierungen erhältlich sind, die einen Farbstoff der Formel (I) enthalten. Die Medien zeigen eine schnelle und hohe Vernetzung des Matrixpolymeren und in sie können helle Hologramme einbelichtet werden.

Gegenstand der vorliegenden Erfindung ist daher eine Photopolymer-Formulierung umfassend eine Polyol-Komponente, eine Polyisocyanat-Komponente, ein Schreibmonomer und einen Photoinitiator, dadurch gekennzeichnet, dass der Photoinitiator einen Farbstoff der allgemeinen Formel (I) enthält

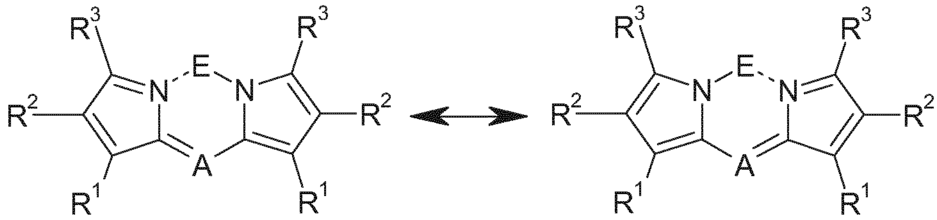

(I)

worin

A für N oder C-$R^A$ steht, wobei $R^A$ für Wasserstoff oder einen gegebenenfalls substituierten aromatischen, aliphatischen oder araliphatischen Rest steht,

E für einen Rest eines Elements ausgewählt aus Bor, Aluminium, Gallium, Indium, Scandium, Yttrium steht, welcher mit zwei Halogenresten oder einem Rest ausgewählt aus Sauerstoff und Schwefel substituiert ist, und

$R^1$, $R^2$, $R^3$ unabhängig voneinander für Wasserstoff, Halogen, Cyano, Nitro, gegebenenfalls fluoriertes Alkoxy oder einen gegebenenfalls substituierten aromatischen, aliphatischen oder araliphatischen Rest stehen.

Bei den erfindungsgemäß eingesetzten Farbstoffen der allgemeinen Formel (I) handelt es sich um Neutralfarbstoffe, die die Nachteile von ionischen Farbstoffen nicht aufweisen. Überraschend hat sich zudem gezeigt, dass sich durch Einsatz der speziellen Farbstoffe der allgemeinen Formel (I) Photopolymer-Formulierungen herstellen lassen, in die hervorragend helle Hologramme einbelichtet werden können. Dies ist umso überraschender, da im Stand der Technik insbesondere die Kombination von ionischen Farbstoffen mit entgegengesetzt geladenen Co-Initiatoren als geeignete Photoinitiatoren für verschiedene Anwendungen angesehen werden und zudem eine ganze Reihe von Neutralfarbstoffen keinerlei Eignung für Photoinitiatorsysteme in holographischen Anwendungen aufweisen. Überraschend war daher, dass insbesondere die speziellen Farbstoffe der allgemeinen Formel (I) die genannten Anforderungen erfüllen und die Herstellung von holographisch belichtbaren Photopolymeren überhaupt ennöglichen.

Die Farbstoffe der allgemeinen Formel (I) können in ihrer Strukturformel verschiedene Bindungsverhältnisse aufweisen, welche durch die folgenden mesomeren Grenzformeln dargestellt werden können.

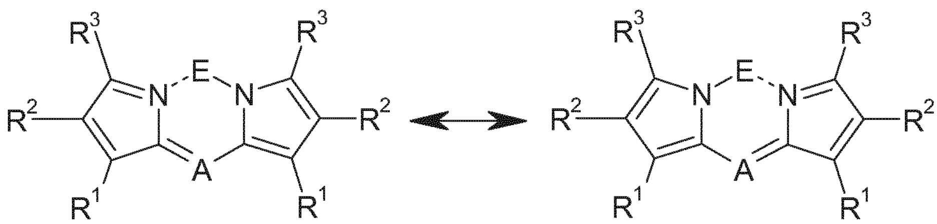

(I)

Bevorzugt weist der Farbstoff der Formel (I) eine Wasseraufnahme von ≤ 5%, besonders bevorzugt von ≤ 3 %, ganz besonders bevorzugt von < 2 % auf. Insbesondere bevorzugt nimmt der Farbstoff der Formel (I) nur Spuren oder gar kein Wasser auf.

Die Wasseraufnahme ergibt sich aus der Formel (F-1)

$$W = (m_f/m_t - 1) * 100\% \qquad (F\text{-}1),$$

worin $m_f$ die Masse des Farbstoffs nach Wassersättigung und $m_t$ die Masse des getrockneten Farbstoffs sind. $m_t$ wird durch Trocknen einer bestimmten Farbstoffmenge bis zur Massenkonstanz, beispielsweise bei erhöhter Temperatur im Vakuum ermittelt. $m_f$ wird durch Stehen einer bestimmtem Farbstoffmenge an der Luft bei einer definierten Luftfeuchtigkeit bis zur Gewichtskonstanz bestimmt.

Für den Fall, das A für C- $R^A$ steht, umfasst $R^A$ bevorzugt einen gegebenenfalls substituierten aromatischen oder aliphatischen Rest, wobei gegebenenfalls substituierte aromatische oder aliphatische Reste auch heteroaromatische oder heteroaliphatische Reste sein können.

Dabei können aliphatische Reste für $R^A$ bevorzugt $C_1$-$C_{20}$-Alkylreste, besonders bevorzugt für $C_1$-$C_6$-Alkylreste stehen. $C_1$-$C_6$-Alkylreste stehen beispielsweise für Methyl, Ethyl, n-Propyl, isoPropyl, n-Butyl, sec.-Butyl, tert.-Butyl, n-Pentyl, 1-Methylbutyl, 2-Methylbutyl, 3-Methylbutyl, neo-Pentyl, 1-methylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, $C_1$-$C_{18}$-Alkylreste darüber hinaus beispielsweise für für n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl, n-Octadecyl oder Stearyl. Als heteroaliphatische Reste für $R^A$ kommen bevorzugt Polyetherreste, bevorzugt langkettige Ethylenoxid- oder Propylenoxid-Reste mit bis zu 8 Wiederholungseinheiten in Frage. Weiterhin können Ester oder Urethane mit 1 bis 20 Kohlenstoffatomen verwendet werden, dabei insbesondere diejenigen mit 1 bis 2 Ester und/oder Urethangruppen.

Des Weiteren können aromatische Reste für $R^A$ bevorzugt aromatische Reste mit 4 bis 24 Gerüstkohlenstoffatomen, in denen keines, ein, zwei oder drei Gerüstkohlenstoffatome pro Cyclus durch Heteroatome, ausgewählt aus der Gruppe Stickstoff, Schwefel oder Sauerstoff, substituiert sein können, vorzugsweise jedoch für einen carbocyclischen aromatischen Rest mit 6 bis 24 Gerüstkohlenstoffatomen sein.

Beispiele für $C_6$-$C_{24}$-Arylreste sind Phenyl, o-, p-, m-Tolyl, Naphthyl, Phenanthrenyl, Anthracenyl oder Fluorenyl, Beispiele für heteroaromatische $C_4$-$C_{24}$-Arylreste in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Bei dem Farbstoff handelt es sich bevorzugt um einen solchen, bei dem in der allgemeinen Formel (I) A bevorzugt für N steht.

Bei dem Farbstoff handelt es sich bevorzugt um einen solchen, bei dem in der allgemeinen Formel (I) E für einen substituierten Bor-Rest, besonders bevorzugt einen zweifach halogensubstituierten Bor-Rest steht.

Bei dem Farbstoff handelt es sich bevorzugt um einen solchen, bei dem in der allgemeinen Formel (I) $R^1$, $R^2$ und $R^3$ unabhängig voneinander für Wasserstoff, Halogen, Cyano, Nitro, gegebenenfalls fluoriertes Alkoxy oder einen gegebenenfalls durch Halogen und/oder N-, O- oder S-haltige Gruppen substituierten aromatischen, aliphatischen oder araliphatischen Rest, bevorzugt unabhängig voneinander für Wasserstoff oder einen gegebenenfalls halogen-, hydroxy- oder alkoxysubstituierten aromatischen, aliphatischen oder araliphatischen Rest, besonders bevorzugt unabhängig voneinander für Wasserstoff oder einen gegebenenfalls halogen-, hydroxy- oder alkoxysubstituierten aromatischen Rest, ganz besonders bevorzugt unabhängig voneinander für Wasserstoff oder einen gegebenenfalls halogensubstituierten aromatischen Rest stehen.

Dabei kann es sich bei dem oder den entsprechend substituierten aromatischen Rest(en) beispielsweise und bevorzugt um aromatische Reste mit 4 bis 24 Gerüstkohlenstoffatomen handeln, in denen keines, ein, zwei oder drei Gerüstkohlenstoffatome pro Cyclus durch Heteroatome, ausgewählt aus der Gruppe Stickstoff, Schwefel oder Sauerstoff, substituiert sein können. Vorzugsweise handelt es sich jedoch bei dem oder den entsprechend substituierten aromatischen Rest(en) um einen carbocyclischen aromatischen Rest mit 6 bis 24 Gerüstkohlenstoffatomen. Beispiele für $C_6$-$C_{24}$-Aryl sind Phenyl, o-, p-, m-Tolyl, Xylyl, Naphthyl, Phenanthrenyl, Anthracenyl oder Fluorenyl, Beispiele für heteroaromatisches $C_4$-$C_{24}$-Aryl in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Benzooxazolyl, Benzothiazolyl, Indazolyl, Chinolyl, Isochinolyl, Naphthyridinyl, Chinazolinyl, Benzofuranyl oder Dibenzofuranyl.

Alkoxy steht beispielsweise für die den für $R^A$ genannten Alkylgruppen entsprechenden Alkoxygruppen.

Besonders bevorzugt handelt es sich jedoch bei dem oder den entsprechend substituierten aromatischen Rest(en) um Phenyl. Besonders bevorzugt handelt es sich bei dem Farbstoff der Formel (I) um einen solchen der Formel (I), wobei A für N steht, E für einen substituierten Bor-Rest, bevorzugt einen zweifach halogensubstituierten Bor-Rest steht und $R^1$, $R^2$ und $R^3$ unabhängig voneinander für Wasserstoff oder einen gegebenenfalls halogen-, hydroxy- oder alkoxysubstituierten aromatischen, aliphatischen oder araliphatischen Rest, bevorzugt unabhängig voneinander für Wasserstoff oder einen gegebenenfalls halogen-, hydroxy- oder alkoxysubstituierten aromatischen Rest, ganz besonders bevorzugt unabhängig voneinander für Wasserstoff oder einen gegebenenfalls halogensubstituierten aromatischen Rest stehen.

Ganz besonders bevorzugt sind Farbstoffe der Formel (I), worin A für N steht, E für einen zweifach halogensubstituierten Bor-Rest steht und $R^1$, $R^2$ und $R^3$ unabhängig voneinander für Wasserstoff oder einen gegebenenfalls halogen-, hydroxy- oder alkoxysubstituierten aromatischen, aliphatischen oder araliphatischen Rest, bevorzugt unabhängig voneinander für Wasserstoff oder einen gegebenenfalls halogen-, hydroxy- oder alkoxysubstituierten aromatischen Rest, ganz besonders bevorzugt unabhängig voneinander für Wasserstoff oder einen gegebenenfalls halogensubstituierten aromatischen Rest stehen.

Als Halogensubstituenten für den Bor-Rest E kommen dabei beispielsweise Fluor-, Chlor-, Brom- oder Iod-Substituenten, bevorzugt Fluor- oder Chlor-Substituenten in Frage. Besonders bevorzugt sind Fluor-Substituenten.

Als Halogensubstituenten für die aromatischen Reste $R^1$, $R^2$ und $R^3$ kommen dabei beispielsweise Fluor-, Chlor-, Brom- oder Iod-Substituenten, bevorzugt Fluor-, Chlor- oder Brom-Substituenten in Frage. Besonders bevorzugt sind Fluor- oder Brom-Substituenten.

In bevorzugten Ausführungsformen der Erfindung stehen in der allgemeinen Formel (I) die Reste $R^2$ für Wasserstoff und die Reste $R^1$ und $R^3$ unabhängig voneinander für einen gegebenenfalls halogen-, hydroxy- oder alkoxysubstituierten, bevorzugt gegebenenfalls halogensubstituierten aromatischen Rest. Bevorzugt stehen dabei die Reste $R^1$ oder $R^3$ für halogen-, hydroxy- oder alkoxysubstituierte, vorzugsweise halogensubstituierte aromatische Reste und die jeweils anderen Reste aus unsubstituierten aromatischen Resten. Weiterhin bevorzugt stehen alle Reste $R^1$ und $R^3$ für einen unsubstituierten aromatischen Rest.

Beispielhafte Farbstoffe der allgemeinen Formel (I) sind die Farbstoffe der Formeln (I-a) bis (I-c)

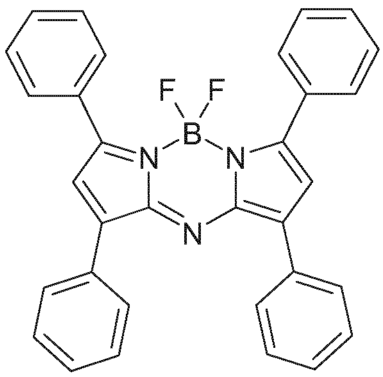

(I-a)

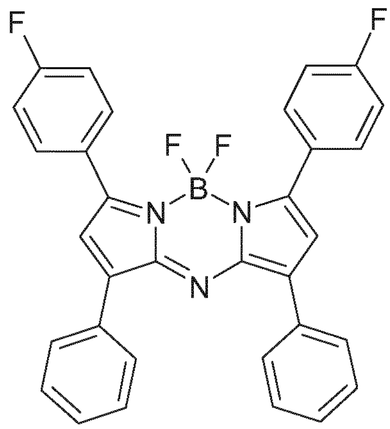

(I-b)

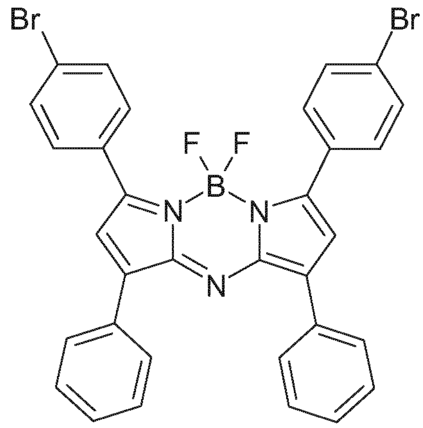

(I-c)

die auch analog zu Formel (I) als mesomere Grenzformeln dargestellt werden können.

Durch den Einsatz der Farbstoffe der Formel (I) ist es zudem möglich, auf Co-Solventien, insbesondere dipolar-aprotische Co-Solventien, wie z.B. DMSO, NMP oder NEP, zur Verbesserung der Löslichkeit der Farbstoffe in den Photopolymer-Formulierungen zu verzichten. Dadurch werden Rückstände solcher in der Regel schwer rückstandsfrei zu entfernenden Co-Solventien in den holographischen Medien vermieden. Dies ist insofern von Vorteil, da nachträglich ausdampfende Co-Solvens-Rückstände die Qualität der einbelichteten Hologramme z.B. durch nachträglich auftretenden Schrumpf und damit Veränderung der Gitterabstände geschriebener Hologramme signifikant verändern können oder sich nachteilig auf Verklebungseigenschaften auswirken können.

Daher kann es für bestimmte Anwendungen vorteilhaft und bevorzugt sein, als erfindungsgemäße Photopolymer-Formulierung eine solche einzusetzen, die keine Co-Solventien aufweist.

Geeignete Photoinitiatoren sind üblicherweise durch aktinische Strahlung aktivierbare Verbindungen, die eine Polymerisation der entsprechender Gruppen auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden, hier zu existiert ein breiter Stand der Technik.

Typ 1-Photoinitiatoren (Norrish-Typ-I) für die radikalische Photopolymerisation bilden beim Bestrahlen durch eine unimolekulare Bindungsspaltung freie Radikale.

Beispiele für Typ 1-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bisimidazole, Aroylphosphinoxide, z.B. 2,4,6-Trimethyl-benzoyl-diphenylphosphinoxid, Sulfonium- und Iodoniumsalze.

Typ 11-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimetlaylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II- Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ I-Systeme und leiten sich von Übergangsmetall-Komplexen der ersten Reihe ab. Hier sind beispielsweise Chrom-Salze, wie z.B. traiis-$Cr(NH_3)_2(NCS)_4$- (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Orgauometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren SbF6-, $AsF_6$- oder $PF_6^-$. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls $SbF_6^-$, $AsF_6^-$ oder $PF_6^-$ verwendet. Ansonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit $SbF_b$ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit Farbstoffen der Formel (I).

Als Polyisocyanat-Komponente a) können alle dem Fachmann an sich gut bekannten Verbindungen oder deren Mischungen eingesetzt werden, die im Mittel zwei oder mehr NCO-Funktionen pro Molekül aufweisen. Diese können

auf aromatischer, araliphatischer, aliphatischer oder cycloaliphatischer Basis sein. In untergeordneten Mengen können auch Monoisocyanate und/oder ungesättigte Gruppen enthaltende Polyisocyanate mit verwendet werden.

Beispielsweise geeignet sind Butylendiisocyanat, Hexamethylendiisocyanat (HDI), Isophorondiisocyanat (IPDI), 1,8-Diisocyanato-4-(isocyanatomethyl)-octan, 2,2,4- und/oder 2,4,4-Trimethylhexamethylendiisocyanat, die isomeren Bis-(4,4'-isocyanatocyclohexyl)methan und deren Mischungen beliebigen Isomerengehalts, Isocyanatomethyl-1,8-octandiisocyanat, 1,4-Cyclolvexylendüsocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat und/oder Triphenylmethan-4,4',4"-triisocyanat.

Ebenfalls möglich ist der Einsatz von Derivaten monomerer Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen.

Bevorzugt ist der Einsatz von Polyisocyanaten auf Basis aliphatischer und/oder cycloaliphatischer Di- oder Triisocyanate.

Besonders bevorzugt handelt es sich bei den Polyisocyanaten der Komponente a) um di- oder oligomerisierte aliphatische und/oder cycloaliphatische Di- oder Triisocyanate.

Ganz besonders bevorzugt sind Isocyanurate, Uretdione und/oder Iminooxadiazindione basierend auf HDI, 1,8-Diisocyanato-4-(isocyaiiatomethyl)-octan oder deren Mischungen.

Ebenfalls können als Komponente a) NCO-funktionelle Prepolymere mit Urethan-, Allophanat-, Biuret- und/oder Amidgruppen eingesetzt werden. Prepolymere der Komponente a) werden in dem Fachmann an sich gut bekannter Art und Weise durch Umsetzung von monomeren, oligomeren oder Polyisocyanaten a1) mit isocyanatreaktiven Verbindungen a2) in geeigneter Stöchiometrie unter optionalem Einsatz von Katalysatoren und Lösemitteln erhalten.

Als Polyisocyanate a1) eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die diem Fachmann an sich gut bekannten höhermolekularen Folgeprodukte monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdione-, Iminooxadiazindionstruktur jeweils einzeln oder in beliebigen Mischungen untereinander eingesetzt werden.

Beispiele für geeignete monomere Di- oder Triisocyanate, die als Komponente a1) eingesetzt werden können, sind Butylendiisocyanat, Hexamethylendiisocyanat (HDI), Isophorondiisocyanat (IPDI), Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und/oder 2,6-Toluen-diisocyanat.

Als isocyanatreaktive Verbindungen a2) zum Aufbau der Prepolymere werden bevorzugt OHfunktionelle Verbindungen eingesetzt. Diese sind analog den OH-funktionellen Verbindungen wie sie nachfolgend für die Komponente b) beschrieben sind.

Ebenfalls möglich ist der Einsatz von Aminen zur Prepolymerherstellung. Beispielsweise geeignet sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere mit zahlenmittleren Molmassen bis 10000 g/Mol oder deren beliebige Gemische untereinander.

Zur Herstellung von Biuretgruppen-haltigen Prepolymeren wird Isocyanat im Überschuss mit Amin umgesetzt, wobei eine Biuretgruppe entsteht. Als Amine eignen sich in diesem Falle für die Umsetzung mit den erwähnten Di-, Tri- und Polyisocyanaten alle oligomeren oder polymeren, primären oder sekundären, difunktionellen Amine der vorstehend genannten Art.

Bevorzugte Prepolymere sind Urethane, Allophanate oder Biurete aus aliphatischen Isocyanat-funktionellen Verbindungen und oligomeren oder polymeren Isocyanat-reaktiven Verbindungen mit zahlenmittleren Molmassen von 200 bis 10000 g/Mol, besonders bevorzugt sind Urethane, Allophanate oder Biurete aus aliphatischen Isocyanat-funktionellen Verbindungen und oligomeren oder polymeren Polyolen oder Polyaminen mit zahlenmittleren Molmassen von 500 bis 8500 g/Mol und ganz besonders bevorzugt sind Allophanate aus HDI oder TMDI und difunktionellen Polyetherpolyolen mit zahlenmittleren Molmassen von 1000 bis 8200 g/Mol.

Bevorzugt weisen die vorstehend beschriebenen Prepolymere Restgehalte an freiem monomeren Isocyanat von weniger als 1 Gew.-%, besonders bevorzugt weniger als 0.5 Gew.-% und ganz besonders bevorzugt weniger als 0.2 Gew.-% auf.

Selbstverständlich kann die Polyisocyanat-Komponente anteilsmäßig neben den beschriebenen Prepolymeren weitere Isocyanatkomponenten enthalten. Hierfür kommen aromatische, araliphatische, aliphatische und cycloaliphatische Di-, Tri- oder Polyisocyanate in Betracht. Es können auch Mischungen solcher Di-, Tri- oder Polyisocyanate eingesetzt werden. Beispiele geeigneter Di-, Tri- oder Polyisocyanate sind Butylendüsocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat (TMDI), die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendüsocyanate, 1,4-Phenylendiisocyanat, 2,4-und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Hartstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat. Besonders bevorzugt sind die oligomeren Isocyanurate, Uretdione und Iminooxadiazindione des HDI sowie deren Mischungen.

Es ist gegebenenfalls auch möglich, dass die Polyisocyanat-Komponente a) anteilsmäßig Isocyanate enthält, die teilweise mit isocyanat-reaktiven ethylenisch ungesättigten Verbindungen umgesetzt sind. Bevorzugt werden hierbei als isocyanat-reaktives ethylenisch ungesättigte Verbindungen $\alpha,\beta$-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly($\varepsilon$-caprolacton)mono-(meth)acrylate, wie z.B. Tone® M100 (Dow, USA), 2-Hydroxypropyl(meth)acrylat, 4-Hydroxy-butyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische in Betracht. Darüber hinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Der Anteil an Isocyanaten an der Isocyanatkomponente a), die teilweise mit isocyanat-reaktiven ethylenisch ungesättigten Verbindungen umgesetzt sind, beträgt 0 bis 99 %, bevorzugt 0 bis 50 %, besonders bevorzugt 0 bis 25 % und ganz besonders bevorzugt 0 bis 15 %.

Es ist gegebenenfalls auch möglich, dass die vorgenannten Polyisocyanat-Komponente a) vollständig oder anteilsmäßig Isocyanate enthält, die ganz oder teilweise mit dem Fachmann aus der Beschichtungstechnologie bekannten Blockierungsmitteln umgesetzt sind. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, $\varepsilon$-Caprolactam, N-tert.-Butyl-benzylamin, Cyclopentanoncarboxyethylester oder beliebige Gemische dieser Blockierungsmittel.

Besonders bevorzugt ist, wenn die Polyisocyanat-Komponente ein aliphatisches Polyisocyanat oder ein aliphatisches Präpolymer und bevorzugt ein aliphatisches Polyisocyanat oder Präpolymer mit primären NCO-Gruppen ist.

Als Polyol-Komponente b) können an sich alle polyfunktionellen, isocyanatreaktiven Verbindungen eingesetzt werden, die im Mittel wenigstens 1.5 isocyanatreaktive Gruppen pro Molekül auf weisen.

Isocyanatreaktive Gruppen im Rahmen der vorliegenden Erfindung sind bevorzugt Hydroxy-, Amino- oder Thiogruppen, besonders bevorzugt sind Hydroxyverbindungen.

Geeignete polyfunktionelle, isocyanatreaktive Verbindungen sind beispielsweise Polyester-, Polyether-, Polycarbonat-, Poly(meth)acrylat- und/oder Polyurethanpolyole.

Als Polyesterpolyole sind beispielsweise lineare Polyesterdiole oder verzweigte Polyesterpolyole geeignet, wie sie in bekannter Weise aus aliphatischen, cycloaliphatischen oder aromatischen Di- bzw. Polycarbonsäuren bzw. ihren Anhydriden mit mehrwertigen Alkoholen einer OH-Funktionalität $\geq 2$ erhalten werden.

Beispiele für solche Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren beliebige Gemische untereinander.

Beispiele für geeignete Alkohole sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder deren beliebige Gemische untereinander.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen wie Butyrolacton, $\varepsilon$-Caprolacton und/oder Methyl-$\varepsilon$-caprolacton an hydroxyfunktionelle Verbindungen wie mehrwertige Alkohole einer OH-Funktionalität $\geq 2$ beispielsweise der vorstehend genannten Art erhalten werden können.

Solche Polyesterpolyole haben bevorzugt zahlenmittlere Molmassen von 400 bis 4000 g/Mol, besonders bevorzugt von 500 bis 2000 g/Mol. Ihre OH-Funktionalität beträgt bevorzugt 1.5 bis 3.5, besonders bevorzugt 1.8 bis 3.0.

Geeignete Polycarbonatpolyole sind in an sich bekannter Weise durch Umsetzung von organischen Carbonaten

oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkoholen einer OH-Funktionalität ≥ 2, bevorzugt 1,4-Butandiol, 1,6-Hexandiol und/oder 3-Methylpentandiol, oder auch Polyesterpolyole können zu Polycarbonatpolyolen umgearbeitet werden.

Solche Polycarbonatpolyole haben bevorzugt zahlenmittlere Molmassen von 400 bis 4000 g/Mol, besonders bevorzugt von 500 bis 2000 g/Mol. Die OH-Funktionalität dieser Polyole beträgt bevorzugt 1.8 bis 3.2, besonders bevorzugt 1.9 bis 3.0.

Geeignete Polyetherpolyole sind gegebenenfalls blockweise aufgebaute Polyadditionsprodukte cyclischer Ether an OH- oder NH-funktionelle Startennoleküle.

Geeignete cyclische Ether sind beispielsweise Styroloxide, Ethylenoxid, Propylenoxid, Tetrahydrofuran, Butylenoxid, Epichlorhydrin, sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden, wobei der 1-Alykenoxidanteil nicht höher als 80 Gew.-% ist. Besonders bevorzugt sind Propylenoxid-homopolymere sowie statistische oder Block-Copolymere, die Oxyethylen-, Oxypropylen- und/oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten C3- und C4-Isomere.

Solche Polyetherpolyole haben bevorzugt zahlenmittlere Molmassen von 250 bis 10000 g/Mol, besonders bevorzugt von 500 bis 8500 g/Mol und ganz besonders bevorzugt von 600 bis 4500 g/Mol. Die OH-Funktionalität beträgt bevorzugt 1.5 bis 4.0, besonders bevorzugt 1.8 bis 3.1.

Daneben sind als Bestandteile der Polyol-Komponente b) als polyfunktionelle, isocyanatreaktive Verbindungen auch niedermolekulare, d.h. mit Molekulargewichten kleiner 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Dies können beispielsweise sein Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A, (2,2-Bis(4-hydroxycyclohexyl)propan), 2,2-Dimethyl-3-hydroxypropionsäure (2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Bei einer weiteren bevorzugten Ausführungsform ist vorgesehen, dass das Schreibmonomer wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (II)

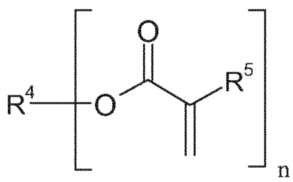

(II)

handeln, bei denen n≥1 und n≤4 ist und $R^4$, $R^5$ unabhängig voneinander Wasserstoff, lineare, verzweigte, cyclische oder heterocyclische unsubstituierte oder gegebenenfalls auch mit Heteroatomen substituierte organische Reste sind. Besonders bevorzugt ist $R^5$ Wasserstoff oder Methyl und/oder $R^4$ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und

Dicyclopentadienyl-Einheiten enthaltende Verbindungen sowie olefinisch ungesättigte Verbindungen wie z.B. Styrol, α-Methylstyrol, Vinyltoluol, Olefinine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenylmethacrylat, 2,4,6-Trichlorphenylacrylat, 2,4,6-Trichlorphenylmethacrylat, 2,4,6-Tribromphenylacrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Selbstverständlich können auch weitere Urethanacrylate verwendet werden. Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hierfür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,5-Naphthylendiisocyanat, m-Methylthiophenylisocyanat, Triphenylmethan-4,4',4'' -triisocyanat und Tris(p-isocyanatophenyl)thiophosphat oder deren Derivate mit Urethan-, Harnstoff-, Carbodiimid-, Acylhamstoff , Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl(meth)acrylat, Polyethylen-oxid-mono(meth)acrylate, Polypropylenoxidmono(meth)acrylate, Polyalkylenoxidmono(meth)-acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate. Darüber hinaus sind als isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunlctionellen Acrylaten wie Hydroxyethyl(meth)acrylat, Hydroxypropyl(meth)acrylat und Hydroxybutyl(meth)-acrylat.

Besonders bevorzugt ist eine Kombination aus Komponenten a) und b) bei der Herstellung der Matrixpolymere bestehend aus Additionsprodukten von Butyrolacton, e-Caprolacton und/oder Methyl-E-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Ganz besonders bevorzugt sind Additionsprodukte von e-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

Gemäß einer weiteren bevorzugten Ausführungsform ist vorgesehen, dass die Photopolymer-Formulierung zusätzlich Urethane als Weichmacher enthält, wobei die Urethane insbesondere mit wenigstens einem Fluoratom substituiert sein können.

Bevorzugt können die Urethane die allgemeine Formel (III)

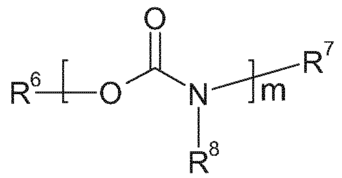

(III)

haben, in der m≥1 und m≤8 ist und $R^6$, $R^7$, $R^8$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^6$, $R^7$, $R^8$ mit wenigstens einem Fluoratom substituiert ist und besonders bevorzugt $R^6$ ein organischer Rest mit mindestens einem Fluoratom ist. Besonders bevorzugt ist $R^7$ ein linearer, verzweigter, cyclischer oder heterocyclischer unsubstituierter oder gegebenenfalls auch mit Heteroatomen wie beispielsweise Fluor substituierter organischer Rest.

Gegenstand der Erfindung ist auch ein holographisches Medium, enthaltend eine erfindungsgemäße Photopolymer-Formulierung oder erhältlich unter Verwendung einer erfindungsgemäßen Photopolymer-Formulierung. Noch ein weiterer Gegenstand der Erfindung ist die Verwendung einer erfindungsgemäßen Photopolymer-Formulierung zur Herstellung holographischer Medien.

Die erfindungsgemäßen holographischen Medien können durch entsprechende Belichtungsprozesse für optische Anwendungen im gesamten sichtbaren und nahen UV-Bereich (300-800 nm) zu Hologrammen verarbeitet werden können. Visuelle Hologramme umfassen alle Hologramme, die nach dem Fachmann bekannten Verfahren aufgezeichnet werden können. Darunter fallen unter anderem In-Line (Gabor) Hologramme, Off-Axis Hologramme, Full-Aperture Transfer Hologramme, Weißlicht-Transmissionshologramme ("Regenbogenhologramme), Denisyukhologramme, Off-Axis Reflektionshologramme, Edge-Lit Hologramme sowie holographische Stereogramme. Bevorzugt sind Reflektionshologramme, Denisyukhologramme, Transmissionshologramme.

Mögliche optische Funktionen der Hologramme, die mit den erfindungsgemäßen Photopolymer-Formulierungen hergestellt werden können entsprechen den optische Funktionen von Lichtelementen wie Linsen, Spiegel, Umlenkspiegel, Filter, Streuscheiben, Beugungselemente, Diffusoren, Lichtleiter, Lichtlenker (waveguides), Projektionsscheiben und/oder Masken. Ebenfalls können Kombinationen aus dies optischen Funktionen unabhängig voneinander in einem Hologramm vereinigt sein. Häufig zeigen diese optischen Elemente eine Frequenzselektivität, je nachdem wie die Hologramme belichtet wurden und welche Dimensionen das Hologramm hat.

Zudem können mittels der erfindungsgemäßen Photopolymer-Formulierungen auch holographische Bilder oder Darstellungen hergestellt werden, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Design-Möglichkeiten stellen Hologramme, insbesondere Volumenhologramme, eine attraktive technische Lösung für die oben genannten Anwendung dar.

Weiterhin Gegenstand der vorliegenden Erfindung ist daher die Verwendung eines erfindungsgemäßen holographischen Mediums zur Aufzeichnung von In-Line, Off-Axis, Full-Aperture Transfer, Weißlicht-Transmissions, Denisyuk, Off-Axis Reflektions oder Edge-Lit Hologrammen sowie holographischen Stereogrammen, insbesondere zur Herstellung von optischen Elementen, Bildern oder Bilddarstellungen.

Weiterhin Gegenstand der vorliegenden Erfindung ist auch ein Verfahren zur Herstellung eines holographischen Mediums unter Verwendung einer erfindungsgemäßen Photopolymer-Formulierung.

Die Photopolymer-Formulierungen können insbesondere zur Herstellung holographischer Medien in Form eines Films verwendet werden. Dabei wird als Träger eine Lage eines für Licht im sichtbaren Spektralbereich (Transmission größer als 85% im Wellenlängenbereich von 400 bis 780 nm) transparenten Materials oder Materialverbunds ein- oder beidseitig beschichtet sowie ggf. eine Abdeckschicht auf der oder den Photopolymerlagen appliziert.

Bevorzugte Materialien oder Materialverbünde des Trägers basieren auf Polycarbonat (PC), Polyethylenterephthalat (PET), Polybutylenterephthalat, Polyethylen, Polypropylen, Celluloseacetat, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen. Besonders bevorzugt basieren sie auf PC, PET und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan).

Alternativ zu den vorgenannten Kunststoffträgem können auch planare Glasplatten eingesetzt werden, die insbesondere für großflächig abbildungsgenaue Belichtungen Verwendung finden, z.B. für holographische Lithographie (Holographie interference lithography for integrated optics. IEEE Transactions on Electron Devices (1978), ED-25(10), 1193-1200, ISSN:0018-9383).

Die Materialien oder Materialverbünde des Trägers können einseitig oder beidseitig antihaftend, antistatisch, hydrophobiert oder hydrophiliert ausgerüstet sein. Die genannten Modifikationen dienen an der Photopolymerschicht zugewandten Seite dem Zweck, dass die Photopolymerlage von dem Träger zerstörungsfrei abgelöst werden kann. Eine Modifikation der der Photopolymerlage abgewandten Seite des Trägers dient dazu, dass die erfindungsgemäßen Medien speziellen mechanischen Anforderungen genügen, die z.B. bei der Verarbeitung in Rollenlaminatoren, insbesondere bei Rolle-zu-Rolle-Verfahren, gefordert sind.

Die folgenden Beispiele dienen der beispielhaften Erläuterung der Erfindung und sind nicht als Beschränkung aufzufassen.

## Beispiele

Messmethoden:

Die angegebenen OH-Zahlen wurden gemäß DIN 53240-2 bestimmt.

Die angegebenen NCO-Werte (Isocyanat-Gehalte) wurden gemäß DIN EN ISO 11909 bestimmt.

Die Wasseraufnahme der Beispiele wurde bestimmt, indem zunächst jeweils 5-10 g der Farbstoffe in einer offenen Glasschale bei einem Druck von 200 mbar und einer Temperatur von 50 °C bis zur Massenkonstanz getrocknet wurden. Gewogen wurde dabei nach Entnahme aus dem Vakuumtrockenschrank, nachdem die Proben unter Feuchtigkeitsausschluss während 60 min auf Raumtemperatur abkühlen konnten. Zum Ausschluss von Feuchtigkeit vor der Wägung wurden die Glasschalen mit Parafilm M® (Pechiney Plastic Packaging, Chicago, IL 60631, USA, www.parafilm.com) luftdicht verschlossen und dann gewogen wurden. Anschließend wurde 7 Tage an der Luft bei Raumtemperatur (22 °C) und einer relativen Luftfeuchtigkeit von 90 % bis zur Massenkonstanz stehen gelassen und gewogen. Die Wasseraufnahme ergabt sich dann aus der Formel (F-1)

$$W = (m_f/m_t - 1)*100\% \quad (F-1),$$

worin $m_f$ die Masse des Farbstoffs nach Wassersättigung und $m_t$ die Masse des getrockneten Farbstoffs sind.

Messung der holographischen Eigenschaften DE und $\Delta n$ der holographischen Medien mittels Zweistrahlinterferenz in Reflexionsanordnung.

Mit einem holographischen Versuchsaufbau wie in Figur 1 dargestellt, wurden die Beugungseffizienz (DE) der Medien gemessen. Der Strahl eines He-Ne Lasers (Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0.4 cm. Die polarisationsabhängigen Strahlteiler (PBS) teilen den Laserstrahl in zwei kohärente gleich polarisierte Strahlen. Über die $\lambda/2$ Plättchen wurden die Leistung des Referenzstrahls auf 0.5 mW und die Leistung des Signalstrahls auf 0.65 mW eingestellt. Die Leistungen wurden mit den Halbleiterdetektoren (D) bei ausgebauter Probe bestimmt. Der Einfallswinkel ($\alpha_0$) des Referenzstrahls beträgt -21.8°, der Einfallswinkel ($\beta_0$) des Signalstrahls beträgt 41.8°. Die Winkel werden ausgehend von der Probennonnale zur Strahlrichtung gemessen. Gemäß Figur 1 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die senkrecht zur Winkelhalbierenden der zwei auf die Probe einfallenden Strahlen liegen (Reflexionshologramm). Der Streifenabstand Λ, auch Gitterperiode genannt, im Medium beträgt ~225 nm (der Brechungsindex des Mediums zu ~1.504 angenommen).

Figur 1 zeigt die Geometrie eines Holographic Media Testers (HMT) bei $\lambda$ = 633 nm (He-Ne Laser): M = Spiegel, S = Verschluss, SF = Raumfilter, CL = Kollimatorlinse, $\lambda/2$ = $\lambda/2$ Platte, PBS = polarisationsempfindlicher Strahlteiler, D = Detektor, I = Irisblende, $\alpha_0$ = -21.8°, $\beta_0$ = 41.8° sind die Einfallswinkel der kohärenten Strahlen außerhalb der Probe (des Mediums) gemessen. RD = Referenzrichtung des Drehtisches.

Es wurden auf folgende Weise Hologramme in das Medium geschrieben:

- Beide Shutter (S) sind für die Belichtungszeit *t* geöffnet.
- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstralals wurde auf einen Durchmesser < 1 mm geschlossen. Damit erreichte man, dass für alle Drehwinkel ($\Omega$) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelsclarittweite von 0.05°. $\Omega$ wird von der Probennormale zur Referenzrichtung des Drehtisches gemessen. Die Referenzrichtung des Drehtisches ergibt sich dann wenn beim Schreiben des Hologramms der Einfallswinkel des Referenz- und des Signalstrahls betragsmäßig gleich sind also $\alpha_0$ = -31.8° und $\beta_0$ = 31.8° gilt. Dann beträgt $\Omega_{recording}$ = 0°. Für $\alpha_0$ = -21.8° und $\beta_0$ = 41.8° beträgt $\Omega_{recording}$ daher 10°. Allgemein gilt für das Interferenzfeld beim Schreiben ("recording") des Hologramms:

$$\alpha_0 = \theta_0 + \Omega_{recording}.$$

$\theta_0$ ist der Halbwinkel im Laborsystem außerhalb des Mediums und es gilt beim Schreiben des Hologramms:

$$\theta_0 = \frac{\alpha_0 - \beta_0}{2}.$$

In diesem Fall gilt also $\theta_0$ = -31.8°. An jedem angefahrenen Drehwinkel $\Omega$ wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel $\Omega$ als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve, sie beschreibt den Beugungswirkungsgrad $\eta$ in Abhängigkeit des Drehwinkels $\Omega$, des geschriebenen Hologramms gemessen und in einem Computer gespeichert. Zusätzlich wurde auch die in die nullte Ordnung transmittierte Intensität gegen den Drehwinkel $\Omega$ aufgezeichnet und in einem Computer gespeichert.

Die maximale Beugungseffizienz (DE = $\eta_{max}$) des Hologramms, also sein Spitzenwert, wurde bei $\Omega_{reconstruction}$ ermittelt. Eventuell musste dazu die Position des Detektors des abgebeugten Strahls verändert werden, um diesen maximalen Wert zu bestimmen.

Der Brechungsindexkontrast $\Delta n$ und die Dicke d der Photopolymerschicht wurde nun mittels der Coupled Wave Theorie (siehe H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0'$ bzw. der entsprechende Winkel des Drehtisches $\Omega_{reconstruction}$, bei dem maximale Beugungseffizienz erreicht wird von $\alpha_0$ bzw. vom entsprechenden $\Omega_{recording}$ abweichen. Dadurch verändert sich die Bragg-Bedingung. Diese Veränderung wird im Auswerteverfahren berücksichtigt. Das Auswerteverfahren wird im Folgenden beschrieben:

Alle geometrischen Größen, die sich auf das geschriebene Hologramm beziehen und nicht auf das Interferenzmuster werden als gestrichene Größen dargestellt.

Für die Braggkurve $\eta(\Omega)$ eines Reflexionshologramms gilt nach Kogelnik:

$$\eta = \begin{cases} \dfrac{1}{1 - \dfrac{1-(\xi/\nu)^2}{\sin^2\left(\sqrt{\xi^2 - \nu^2}\right)}}, \text{für } \nu^2 - \xi^2 < 0 \\ \dfrac{1}{1 + \dfrac{1-(\xi/\nu)^2}{\sinh^2\left(\sqrt{\nu^2 - \xi^2}\right)}}, \text{für } \nu^2 - \xi^2 \geq 0 \end{cases}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left( 2 \cdot \cos(\psi' - \vartheta') - \frac{\lambda}{n \cdot \Lambda'} \right)$$

$$\psi' = \frac{\beta' + \alpha'}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" *DP* = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannt Winkel β' kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[\sin(\alpha_0) + \sin(\beta_0) - \sin(\theta_0 + \Omega_{reconstruction})\right]$$

ν ist die Gitterstärke, ξ ist der Detuning Parameter und ψ' die Orientierung (Slant) des Brechungsindexgitters das geschrieben wurde. α' und β' entsprechen den Winkeln $\alpha_0$ und $\beta_0$ des Interferenzfeldes beim Schreiben des Hologramms, aber im Medium gemessen und für das Gitter des Hologramms gültig (nach Dickenschwindung). n ist der mittlere Brechungsindex des Photopolymers und wurde zu 1.504 gesetzt. λ ist die Wellenlänge des Laserlichts im Vakuum.

Die maximale Beugungseffizienz (DE = $\eta_{max}$) ergibt sich dann für ξ = 0 zu:

$$DE = \tanh^2(\nu) = \tanh^2\left(\frac{\pi \cdot \Delta n \cdot d'}{\lambda \cdot \sqrt{\cos(\alpha') \cdot \cos(\alpha' - 2\psi)}}\right)$$

Figur 1 zeigt die gemessene transmittierte Leistung $P_T$ (rechte *y*-Achse) als durchgezogene Linie gegen das Winkeldetuning ΔΩ aufgetragen, die gemessene Beugungseffizienz η (linke *y*-Achse) als ausgefüllte Kreise gegen das Winkeldetuning ΔΩ aufgetragen (soweit die endliche Größe des Detektors es erlaubte) und die Anpassung der Kogelnik Theorie als gestrichelte Linie (linke *y*-Achse).

Die Messdaten der Beugungseffizienz, die theoretische Braggkurve und die transmittierte Intensität werden - wie in Figur 2 - gezeigt, gegen den zentrierten Drehwinkel $\Delta\Omega \equiv \Omega_{reconstruction} - \Omega = \alpha'_0 - \vartheta'_0$, auch Winkeldetuning genannt, aufgetragen.

Da DE bekannt ist wird die Form der theoretischen Braggkurve nach Kogelnik nur noch durch die Dicke *d'* der Photopolymerschicht bestimmt. Δn wird über DE für gegebene Dicke *d'* so nachkorrigiert, dass Messung und Theorie von DE immer übereinstimmen. *d'* wird nun solange angepasst bis die Winkelpositionen der ersten Nebenminima der theoretischen Braggkurve mit den Winkelpositionen der ersten Nebenmaxima der transmittierten Intensität übereinstimmen und zudem die volle Breite bei halber Höhe (FWHM) für die theoretische Braggkurve und für die transmittierte Intensität übereinstimmen.

Da die Richtung in der ein Reflexionshologramm bei der Rekonstruktion mittels eines Ω-Scans mitrotiert, der Detektor für das abgebeugte Licht aber nur einen endlichen Winkelbereich erfassen kann, wird die Braggkurve von breiten Holgrammen (kleines *d'*) bei einem Ω-Scan nicht vollständig erfasst, sondern nur der zentrale Bereich, bei geeigneter Detektorpositionierung. Daher wird die zur Braggkurve komplementäre Form der transmittierten Intensität zur Anpassung der Schichtdicke *d'* zusätzlich herangezogen.

Figur 2 zeigt die Darstellung der Braggkurve η nach der Coupled Wave Theorie (gestrichelte Linie), des gemessenen Beugungswirkungsgrades (ausgefüllte Kreise) und der transmittierten Leistung (schwarz durchgezogene Linie) gegen das Winkeldetuning ΔΩ.

Für eine Formulierung wurde diese Prozedur eventuell mehrfach für verschiedene Belichtungszeiten *t* an verschiedenen Medien wiederholt, um festzustellen bei welcher mittleren Energiedosis des einfallenden Laserstrahls beim Schreiben des Hologramms DE in den Sättigungswert übergeht. Die mittlere Energiedosis E ergibt sich wie folgt aus den Leistungen der zwei den Winkeln $\alpha_0$ und $\beta_0$ zugeordneten Teilstrahlen (Referenzstrahl mit $P_r$ = 0.50 mW und Signalstrahl mit $P_s$ = 0.63 mW), der Belichtungszeit t und dem Durchmesser der Irisblende (0.4 cm):

$$E\,(\text{mJ/cm}^2) = \frac{2 \cdot [P_r + P_s] \cdot t\,(\text{s})}{\pi \cdot 0.4^2\ \text{cm}^2}$$

Die Leistungen der Teilstrahlen wurden so angepasst, dass in dem Medium bei den verwendeten Winkeln $\alpha_0$ und $\beta_0$, die gleiche Leistungsdichte erreicht wird.

Substanzen:

Die verwendeten Lösungsmittel und Reagenzien wurden im Chemikalienhandel bezogen.

| | |
|---|---|
| CGI-909 | Tetrabutylammonium-tris(3-chlor-4-methylphenyl)(hexyl)borat, [1147315-11-4] ist ein von der BASF SE, Basel, Schweiz, hergestelltes Produkt. |
| Desmorapid Z | Dibutylzinn-dilaurat [77-58-7], Produkt der Bayer MaterialScience AG, Leverkusen, Deutschland. |
| Desmodur® N 3900 | Produkt der Bayer MaterialScience AG, Leverkusen, DE, Hexandiisocyanat-basiertes Polyisocyanat, Anteil an Iminooxadiazindion mindestens 30 %, NCO-Gehalt: 23.5 %. |
| Fomrez UL 28 | Urethanisierungskatalysator, Handelsprodukt der Momentive Performance Chemicals, Wilton, CT, USA. |

Herstellung von Farbstoffen

**Beispiel 1: Herstellung von 4-Nitro-1,3-diphenylbutan-1-on:**

In einem 1 L Kolben wurden 94.7 g (0.455 mol) Benzylidenacetophenon in 600 g Methanol gelöst und 138.9 g (2.275 mol) Nitromethan und 166.4 g (2.275 mol) Diethylamin zugegeben und für 16 h am Rückfluss erhitzt. Das Lösungsmittel wurde zur Hälfte im Vakuum abdestilliert und der ausgefallene Feststoff abgetrennt und im Vakuum bis zur Gewichtskonstanz getrocknet. Es wurden 118 g (438 mmol) 4-Nitro-1,3-diphenylbutan-1-on erhalten.

**Beispiel 2: Herstellung von N-[(2Z)-3,5-Diphenyl-2H-pyrrol-2-yliden]-3,5-diphenyl-1H-pyrrol-2-amin**

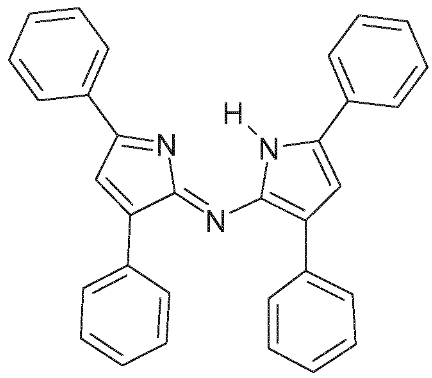

In einem 2L Kolben wurden 113.4 g (79 mmol) 4-Nitro-1,3-diphenylbutan-1-on in 900 g Ethanol gelöst, 486 g (6.31 mol) Ammoniumacetat zugegeben und für 24 h am Rückfluss erhitzt. Das Reaktionsgemisch wurde abgekühlt und das Lösungsmittel im Vakuum abdestilliert. Der Rückstand wurde mit 400 g Wasser und 200 g Ethanol verrührt, der Niederschlag wurde abgetrennt und im Vakuum getrocknet. Es wurden 46 g (102 mmol) N-[(2Z)-3,5-Diphenyl-2H-pyrrol-2-yliden]-3,5-diphenyl-1H-pyrrol-2-amin erhalten.

UV-VIS Spektrum: $\lambda_{max}$: 592 nm, $\varepsilon_0$: 54900 $L\cdot mol^{-1}\cdot cm^{-1}$

**Beispiel 3: Herstellung von (2E)-1-(4-Bromphenyl)-3-phenylprop-2-en-1-on**

In einem 500 mL Kolben wurden 99.4 g (0.50 mol) 4-Bromacetophenon und 53.0 g (0.5 mol) Benzaldehyd vorgelegt und in 50 g Methanol gelöst. Zu dem Gemisch wurden 6.7 g (0.025 mol) einer 15%-igen Natronlauge vorsichtig bei 20-25 °C zugetropft und anschließend 3 h nachgerührt. Das Reaktionsgemisch wurde mit Eisessig neutralisiert, filtriert und der Feststoff im Vakuum getrocknet. Es wurden 107 g (351 mmol) (2E)-1-(4-Bromphenyl)-3-phenylprop-2-en-1-on erhalten.

**Beispiel 4: Herstellung von 1-(4-Bromphenyl)-4-nitro-3-phenylbutan-1-on**

In einem 1L Kolben wurden 46.9 g (154 mmol) (2E)-1-(4-Bromphenyl)-3-phenylprop-2-en-1-on in 450 g Methanol gelöst und 46.9 g (768 mmol) Nitromethan und 56.2 g (768 mmol) Diethylamin zugegeben und für 16 h am Rückfluss erhitzt. Das Lösungsmittel wurde zur Hälfte im Vakuum abdestilliert und der ausgefallenen Feststoff abgetrennt und im Vakuum bis zur Gewichtskonstanz getrocknet. Es wurden 46 g (132 mmol) 1-(4-Bromphenyl)-4-nitro-3-phenylbutan-1-on erhalten.

**Beispiel 5: Herstellung von 5-(4-Bromphenyl)-N-[(2Z)-5-(4-bromphenyl)-3-phenyl-2H-pyrrol-2-yliden]-3-phenyl-1H-pyrrol-2-amin**

In einem 1L Kolben wurden 27.8 g (79 mmol) 1-(4-Bromphenyl)-4-nitro-3-phenylbutan-1-on in 750 g Ethanol gelöst, 223 g (2.89 mol) Ammoniumacetat zugegeben und für 42 h am Rückfluss erhitzt. Das Reaktionsgemisch wurde abgekühlt, der ausgefallene Niederschlag wurde abgetrennt und mit kaltem Ethanol und n-Pentan gewaschen. Es wurden 12 g (20 mmol) 5-(4-Bromphenyl)-N-[(2Z)-5-(4-bromphenyl)-3-phenyl-2H-pyrrol-2-yliden]-3-phenyl-1H-pyrrol-2-amin erhalten.

**Beispiel 6: Herstellung von (2E)-1-(4-Fluorphenyl)-3-phenylprop-2-en-1-on**

In einem 500 mL Kolben wurden 110.7 g (0.80 mol) 4-Fluoracetophenon und 84.9 g (0.80 mol) Benzaldehyd vorgelegt und in 65 g Methanol gelöst. Zu dem Gemisch wurden 10.7 g (0.04 mol) einer 15%-igen Natronlauge vorsichtig bei 20-25 °C zugetropft und anschließend 3 h nachgerührt. Das Reaktionsgemisch wurde mit Eisessig neutralisiert, filtriert und der Feststoff im Vakuum getrocknet. Es wurden 146 g (644 mmol) (2E)-1-(4-Bromphenyl)-3-phenylprop-2-en-1-ou erhalten.

**Beispiel 7: Herstellung von 1-(4-Fluorphenyl)-4-nitro-3-phenylbutan-1-on**

In einem 1L Kolben wurden 138.8 g (613 mmol) (2E)-1-(4-Fluorphenyl)-3-phenylprop-2-en-1-on in 825 g Methanol gelöst und 187.0 g (3.06 mol) Nitromethan und 224.1 g (3.06 mol) Diethylamin zugegeben und für 16 h am Rückfluss erhitzt. Das Lösungsmittel wurde zur Hälfte im Vakuum abdestilliert und der ausgefallenen Feststoff abgetrennt und im Vakuum bis zur Gewichtskonstanz getrocknet. Es wurden 167.7 g (583 mmol) 1-(4-Fluorphenyl)-4-nitro-3-phenylbutan-1-on erhalten.

**Beispiel 8: Herstellung von 5-(4-Fluorphenyl)-N-[(2Z)-5-(4-fluorhenyl)-3-phenyl-2H-pyrrol-2-yliden]-3-phenyl-1H-pyrrol-2-amin**

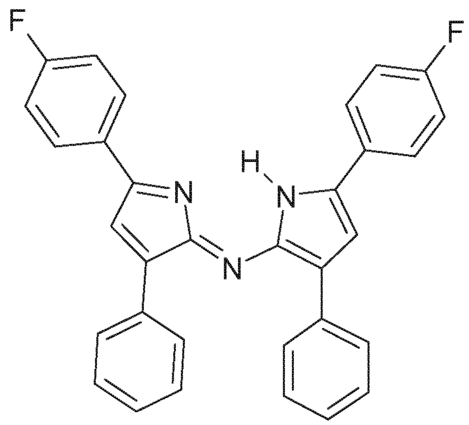

In einem 2L Kolben wurden 129.4 g (450 mmol) 1-(4-Fluorphenyl)-4-nitro-3-phenylbutan-1-on in 975 g Ethanol gelöst, 520 g (6.75 mol) Ammoniumacetat zugegeben und für 3 h am Rückfluss erhitzt. Das Reaktionsgemisch wurde abgekühlt und das Lösungsmittel im Vakuum abdestilliert. Der Rückstand wurde mit 400 g Wasser und 200 g Ethanol verrührt, der Niederschlag wurde abgetrennt und im Vakuum getrocknet. Es wurden 49.6 g (102 mmol) 5-(4-Fluorphenyl)-N-[(2Z)-5-(4-fluorhenyl)-3-phenyl-2H-pyrrol-2-yliden]-3-phenyl-1H-pyrrol-2-amin erhalten.

UV-VIS Spektrum: $\lambda_{max}$: 590 nm, $\varepsilon_0$: 38100 $L \cdot mol^{-1} \cdot cm^{-1}$

**Beispiel 9: Herstellung von (4-Phenyl-1,3-thiazol-2-yl)malononitril**

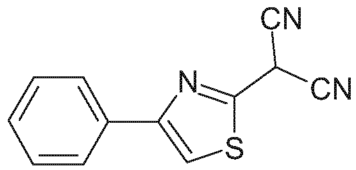

In einem 100 mL Dreihalskolben wurden 10.0 g (56.4 mmol) 2-Oxo-2-phenylethylthiocyanat und 3.73 g (56.4 mmol) Malononitril in 60 mL Ethanol gelöst und langsam 5.14 g (50.8 mmol) Triethylamin zugegeben, so dass die Temperatur nicht über 30 °C stieg. Anschließend wurde 12 h bei Raumtemperatur nachgerührt. Das Reaktionsgemisch wurde mit 50 mL Wasser verdünnt und mit Eisessig angesäuert. Der ausgefallene Feststoff wurde abgetrennt und dreimal mit je 10 mL einer Mischung aus Wasser:Ethanol:Eisessig (10:10:1) gewaschen. Der Feststoff wurde getrocknet und man erhielt 11.1 g (49.1 mmol) (4-Phenyl-1,3-thiazol-2-yl)malononitril.

**Beispiel 10: Herstellung von [N-(3,5-Diphenyl-2H-pyrrol-2-yliden-kappaN)-3,5-diphenyl-1H-pyrrol-2-aminato-kappaN$^1$](difluor)bor (Farbstoff der Formel (I-a))**

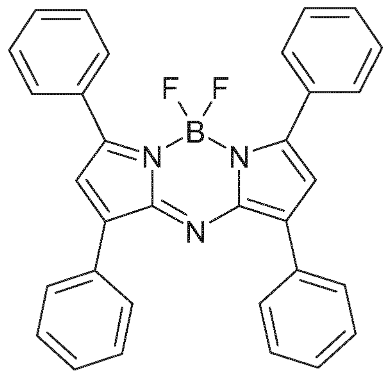

(I-a)

In einem 250 mL Kolben wurden 1.69 g (3.8 mmol) des N-[(2Z)-3,5-Diphenyl-2H-pyrrol-2-yliden]-3,5-diphenyl-1H-pyrrol-2-amin aus Beispiel 2 und 1.76 g (2.28 mmol) Diisopropylethylamin in 7.5 g Dichlormethan gelöst. Zu dem Gemisch wurden 4.05 g (28.5 mmol) Bortrifluorid-diethyletherat vorsichtig bei 20-25 °C zugetropft und anschließend 24 h nachgerührt. Das Reaktionsgemisch wurde mit weiteren 100 mL Dichlormethan versetzt und auf 100 g Eiswasser ausgetragen. Die wässrige Phase wurde dreimal mit 100 mL Dichlormethan extrahiert, filtriert und die vereinigten organischen Phasen wurden mit 200 mL Wasser gewaschen und mit $Na_2SO_4$ getrocknet. Das Lösungsmittel wurde im Vakuum abdestilliert und es wurden 1.6 g (3.2 mmol) des Farbstoffs der Formel (I-a) erhalten.

UV-VIS Spektrum: $\lambda_{max}$: 634 nm, $\varepsilon_0$: 93200 $L \cdot mol^{-1} \cdot cm^{-1}$

**Beispiel 11: Herstellung von Difluor15-(4-fluorphenyl)-N-[5-(4-fluorphenyl)-3-phenyl-2H-pyrrol-2-yliden-kappaN]-3-phenyl-1H-pyrrol-2-aminato-kappaN$^1$}bor** (Farbstoff der **Formel (I-b))**

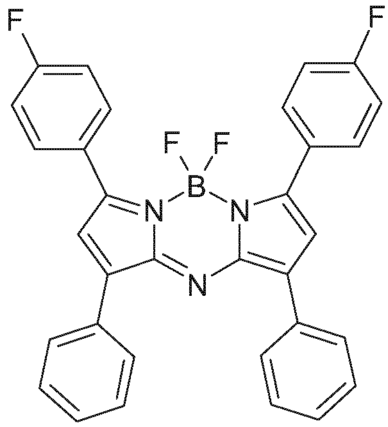

(I-b)

In einem 1 L Kolben wurden 35.9 g (74.0 mmol) 5-(4-Fluorphenyl)-N-[(2Z)-5-(4-fluorhenyl)-3-phenyl-2H-pyrrol-2-yliden]-3-phenyl-1H-pyrrol-2-amin aus Beispiel 8 und 34. 6 g (448 mmol) Diisopropylethylamin in 850 g Dichlormethan gelöst. Zu dem Gemisch wurden 79.5 g (560 mmol) Bortrifluorid-diethyletherat vorsichtig bei 20-25 °C zugetropft und anschließend 48 h nachgerührt. Der ausgefallene Feststoff wurde abgetrennt, zweimal mit je 200 mL Wasser gewaschen und getrocknet. Es wurden 25.5 g (47.7 mmol) des Farbstoffs der Formel (I-b) erhalten.

UV-VIS Spektrum: $\lambda_{max}$: 631 nm, $\varepsilon_0$: 66500 $L\bullet mol^{-1}\bullet cm^{-1}$

**Beispiel 12: Herstellung von {5-(4-Bromphenyl)-N-[5-(4-bromphenyl)-3-phenyl-2H-pyrrol-2-yliden-kappaN]-3-phenyl-1H-pyrrol-2-aminato-kappaN'}(difluor)bor** (**Farbstoff der Formel** (**I-c**))

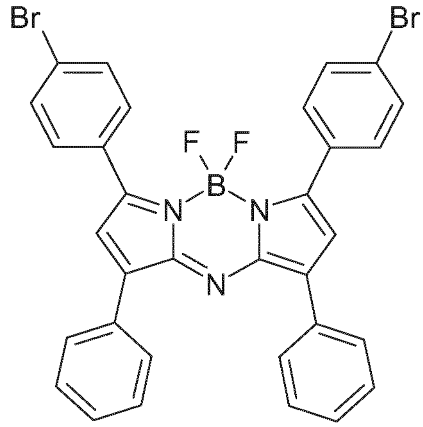

(I-c)

In einem 250 mL Kolben wurden 3.07 g (5.06 mmol) 5-(4-Bromphenyl)-N-[(2Z)-5-(4-bromphenyl)-3-phenyl-2H-pyrrol-2-yliden]-3-phenyl-1H-pyrrol-2-amin aus Beispiel 5 und 13.0 g (168 mmol) Diisopropylethylamin in 150 g Dichlormethan gelöst. Zu dem Gemisch wurden 33.9 g (239 mmol) Bortrifluorid-diethyletherat vorsichtig bei 20-25 °C zugetropft und anschließend 24 h nachgerührt. Das Reaktionsgemisch wurde mit weiteren 100 mL Dichlormethan versetzt und auf 300 g Eiswasser ausgetragen. Die wässrige Phase wurde dreimal mit 100 mL Dichlormethan extrahiert, filtriert und die vereinigten organischen Phasen wurden mit 200 mL Wasser gewaschen und mit $Na_2SO_4$ getrocknet. Das Lösungsmittel wurde im Vakuum abdestilliert und es wurden 2.4 g des Farbstoffs der Formel (I-c) erhalten.

UV-VIS Spektrum: $\lambda_{max}$: 653 nm, $\varepsilon_0$: 85000 $L\bullet mol^{-1}\bullet cm^{-1}$

**Vergleichsbeispiel 1: Methyl-(2Z)-2-{(2E)-2-[2-(dicyanmethylen)-4-phenyl-1,3-thiazol-5(2H)-yliden]ethyliden}-1,3,3-trimethylindolin-5-carboxylat**

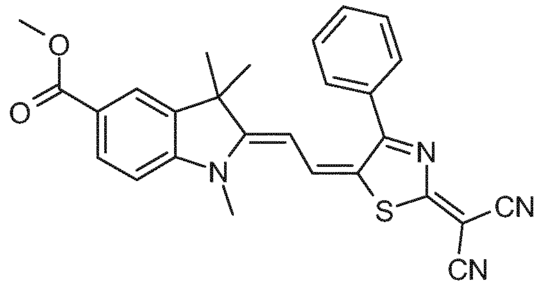

In einem 25 mL Kolben wurden 0.700 g (3.11 mmol) (4-Phenyl-1,3-thiazol-2-yl)malononitril aus Beispiel 9 und 0.806 g (3.11 mmol) Carboxmethyl-Fischerbasenaldehyd (hergestellt nach A. A. Tolmachev, E. S. Kozlov, Yu. L. Slomonskii, Zh. Obshch. Khim. 1989, 59, 939 (engl. Übers. S. 827)) in 5 mL Acetanhydrid gelöst und für 3 h auf 90 °C erwärmt. Das Reaktionsgemisch wurde auf 50 mL Eis ausgetragen, mit wenig Methanol verrührt und der ausgefallene Feststoff abgetrennt. Der Feststoff wurde mit 30 mL Wasser und 20 mL Methanol gewaschen und im Vakuum getrocknet. Man erhielt 1.14 g (2.44 mmol) Methyl-(2Z)-2-{(2E)-2-[2-(dicyanmethylen)-4-phenyl-1,3-thiazol-5(2H)-yliden] ethyliden} -1,3,3-trimethylindolin-5-carboxylat.

UV-VIS Spektrum: $\lambda_{max}$: 636 nm, $\varepsilon_0$: 105100 $L \cdot mol^{-1} \cdot cm^{-1}$

In Tabelle 1 sind die beobachteten Wasseraufnahmen W der ausgewählten Beispiele und des Vergleichs-Beispiels zusammengefasst.

Tab. 1: Wasseraufnahme der ausgewählten Farbstoffe

| Beispiel | W[%] |
|---|---|
| 2 | 1.4 |
| 8 | 0.7 |
| 10 | 1.7 |
| 11 | 1.9 |
| 12 | 1.7 |
| Vergleichs-Beispiel 1 | 2.0 |

**Beispiel 14: Herstellung der Medien zur Bestimmung der holographischen Eigenschaften**

**a) Herstellung der weiteren Komponenten für die Photopolymer-Formulierung:**

Herstellung von Polyol 1:

In einem 1 L Kolben wurden 0.18 g Zinnoctoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

Herstellung des Urethanacrylats 1 (Schreibmonomer): Phosphorothioyltris(oxybenzol-4,1-diylcarbamoyloxyethan-2,1-diyl)trisacrylat

In einem 500 mL Rundkolben wurden 0.1 g 2,6-Di-tert.-butyl-4-methylphenol, 0.05 g Dibutylzinn-dilaurat (Desmorapid Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0.1 % gesunken war. Danach wurde abgekühlt und das Ethylacetat im Vakuum vollständig entfernt. Das Produkt wurde als teilkristalliner Feststoff erhalten.

Herstellung des Urethanacrylats 2 (Schreibmonomer): 2-({[3-(Methylsulfanyl)phenyl]carbamoyl}-oxy)ethylprop-2-enoat

In einem 100 mL Rundkolben wurden 0.02 g 2,6-Di-tert.-butyl-4-methylphenol, 0.01 g Desmorapid Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0.1 % gesunken war. Danach wurde abgekühlt. Das Produkt wurde als farblose Flüssigkeit erhalten.

Herstellung des Additivs 1 (Kontrastmittel): Bis(2,2,3,3,4,4,5,5,6,6,7,7-dodecafluorheptyl)-(2,2,4-trimethylhexan-1.6-diyl)biscarbamat

In einem 50 mL Rundkolben wurden 0.02 g Desmorapid Z und 3.6 g 2,4,4-Trimethylhexane-1,6-diisocyanat (TMDI) vorgelegt und auf 60 °C erwärmt. Anschließend wurden 11.9 g 2,2,3,3,4,4,5,5,6,6,7,7-Dodecafluorheptan-1-ol zugetropft und die Mischung weiter auf 60 °C gehalten, bis der Isocyanatgehalt unter 0.1 % gesunken war. Danach wurde abgekühlt. Das Produkt wurde als farbloses Öl erhalten.

**b) Herstellung der Medien zur Bestimmung der holographischen Eigenschaften**

Beispiel-Medium I

3.38 g der Polyol-Komponente 1 wurden mit 2.00 g Urethanacrylat 1, 2.00 g Urethanacrylat 2, 1.50 g Additiv 1, 0.10 g CGI 909 (Produkt der Fa. BASF SE, Basel, Schweiz), 0.010 g des Farbstoffs aus Beispiel 10 und 0.35 g N-Ethylpyrrolidon bei 60 °C gemischt, so dass eine klare Lösung erhalten wurde. Anschließend wurde auf 30 °C abgekühlt, 0.65 g Desmodur® N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) zugegeben und erneut gemischt. Schließlich wurden 0.01 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt. Dieser Probenkörper wurde 12 Stunden bei Raumtemperatur liegen gelassen und gehärtet.

Beispiel-Medium II

Es wurde gearbeitet wie in Beispiel Medium I, aber unter Verwendung von 0.010 g des Farbstoffs aus Beispiel 11 anstatt 0.010 g des Farbstoffs aus Beispiel 10.

Beispiel-Medium III

Es wurde gearbeitet wie in Beispiel Medium I, aber unter Verwendung von 0.010 g des Farbstoffs aus Beispiel 12 anstatt 0.010 g des Farbstoffs aus Beispiel 10.

Beispiel-Medium IV

3.68 g der Polyol-Komponente 1 wurden mit 2.00 g Urethanacrylat 1, 2.00 g Urethanacrylat 2, 1.50 g Additiv 1, 0.10 g CGI 909 (Produkt der Fa. BASF SE, Basel, Schweiz), 0.010 g des Farbstoffs aus Beispiel 11 bei 60 °C gemischt, so dass eine klare Lösung erhalten wurde. Anschließend wurde auf 30 °C abgekühlt, 0.70 g Desmodur® N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) zugegeben und erneut gemischt. Schließlich wurden 0.01 g Fomrez UL 28 (Urethanisierungskatalysator, (Handelsprodukt der Fa. Momentive Performance Chemicals, Wilton, CT, USA) zugegeben und erneut kurz gemischt. Die erhaltene, flüssige Masse wurde dann auf eine Glasplatte gegeben

und dort mit einer zweiten Glasplatte abgedeckt. Dieser Probenkörper wurde 12 Stunden bei Raumtemperatur liegen gelassen und gehärtet.

Beispiel Medium V

Es wurde gearbeitet wie in Beispiel Medium I, aber unter Verwendung von 0.010 g des Farbstoffs aus Beispiel 12 anstatt 0.010 g des Farbstoffs aus Beispiel 10.

Vergleichs-Medium I

3.38 g der Polyol-Komponente 1 wurden mit 2.00 g Urethanacrylat 1, 2.00 g Urethanacrylat 2, 1.50 g Additiv 1, 0.10 g CGI 909 (Produkt der Fa. BASF SE, Basel, Schweiz), 0.012 g des Farbstoffs aus Vergleichsbeispiel 1 und 0.35 g N-Ethylpyrrolidon bei 60 °C gemischt, so dass eine klare Lösung erhalten wurde. Anschließend wurde auf 30 °C abgekühlt, 0.65 g Desmodur® N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) zugegeben und erneut gemischt. Schließlich wurden 0.01 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt. Dieser Probenkörper wurde 12 Stunden bei Raumtemperatur liegen gelassen und gehärtet.

Vergleichs-Medium II

3.38 g der Polyol-Komponente 1 wurden mit 2.00 g Urethanacrylat 1, 2.00 g Urethanacrylat 2, 1.50 g Additiv 1, 0.10 g CGI 909 (Produkt der Fa. BASF SE, Basel, Schweiz), 0.010 g des Farbstoffs aus Beispiel 2 und 0.35 g N-Ethylpyrrolidon bei 60 °C gemischt, so dass eine klare Lösung erhalten wurde. Anschließend wurde auf 30 °C abgekühlt, 0.65 g Desmodur® N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) zugegeben und erneut gemischt.

Schließlich wurden 0.01 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt. Dieser Probenkörper wurde 12 Stunden bei Raumtemperatur liegen gelassen und gehärtet.

Vergleichs-Medium III

3.38 g der Polyol-Komponente 1 wurden mit 2.00 g Urethanacrylat 1, 2.00 g Urethanacrylat 2, 1.50 g Additiv 1, 0.10 g CGI 909 (Produkt der Fa. BASF SE, Basel, Schweiz), 0.010 g des Farbstoffs aus Beispiel 8 und 0.35 g N-Ethylpyrrolidon bei 60 °C gemischt, so dass eine klare Lösung erhalten wurde. Anschließend wurde auf 30 °C abgekühlt, 0.65 g Desmodur® N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) zugegeben und erneut gemischt. Schließlich wurden 0.01 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt. Dieser Probenkörper wurde 12 Stunden bei Raumtemperatur liegen gelassen und gehärtet.

**Holographische Prüfung:**

Die wie beschrieben hergestellten Medien wurden anschließend mittels einer Messanordnung gemäß Figur 1 in der oben beschriebenen Weise auf ihre holographischen Eigenschaften geprüft. Dabei ergaben sich folgende Messwerte für $\Delta n_{sat}$ bei der Dosis E [$mJ/cm^2$]:

Tab. 2: Holographische Bewertung ausgewählter Beispiele

| Farbstoff aus Beispiel | Beispiel-Medium | $\Delta n_{sat}$ | Dosis [$mJ/cm^2$] |
|---|---|---|---|
| 10 | Beispiel-Medium I | 0.024 | 145 |
| 11 | Beispiel-Medium II | 0.029 | 64 |
| 12 | Beispiel-Medium III | 0.026 | 36 |

(fortgesetzt)

| Farbstoff aus Beispiel | Beispiel-Medium | $\Delta n_{sat}$ | Dosis [mJ/cm²] |
|---|---|---|---|
| 11 | Beispiel-Medium IV | 0.024 | 36 |
| 12 | Beispiel-Medium V | 0.029 | 36 |
| Vergleichs-Beispiel 1 | Vergleichs-Medium I | Kein Hologramm | |
| 2 | Vergleichs-Medium II | Kein Hologramm | |
| 8 | Vergleichs-Medium III | Kein Hologramm | |

Die gefundenen Werte für die Beispiel-Medien I bis V zeigen, dass die in den Photopolymer-Formulierungen eingesetzten erfindungsgemäßen Farbstoffe der Formel (I) für die Verwendung in holographischen Medien aufgrund des hohen Wertes von $\Delta n_{sat}$ sehr gut geeignet sind. Die Ergebnisse für die Beispiel-Medien IV und V zeigen dabei, dass bei Verzicht auf das Co-Solvens N-Ethylpyrrolidon keine Verschlechterung der Werte von $\Delta n_{sat}$ im Vergleich zu den Beispiel-Medien I bis III beobachtet werden. Der im Vergleichs-Medium I eingesetzte neutrale Farbstoff aus Vergleichs-Beispiel 1 eignet sich dagegen nicht zum Schreiben von Hologrammen. Die Vergleichs-Medien II und III zeigen zudem, dass die Farbstoffe erst durch die Gegenwart des Brückenliganden E, d.h. die Gegenwart eines Restes der Elements ausgewählt aus Bor, Aluminium, Gallium, Indium, Scandium, Yttrium, beispielhaft gezeigt durch die Anwesenheit des Bor-Brückenligenden eine ausreichende Aktivität in holographischen Medien beobachtet werden konnte. Ohne diesen speziellen Brückenliganden konnten aufgrund der fehlenden Aktivität mit den eingesetzten Farbstoffen keine Hologramme erzeugt werden.

## Patentansprüche

1. Photopolymer-Formulierung umfassend eine Polyol-Komponente, eine Polyisocyanat-Komponente, ein Schreibmonomer und einen Photoinitiator, **dadurch gekennzeichnet, dass** der Photoinitiator einen Farbstoff der allgemeinen Formel (I) enthält,

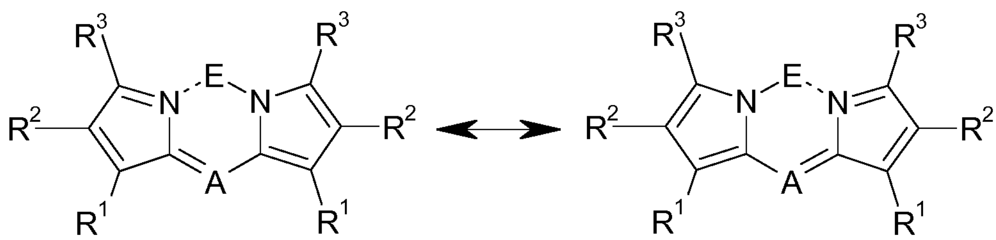

(I)

worin

A für N oder C-$R^A$ steht, wobei $R^A$ für Wasserstoff oder einen gegebenenfalls substituierten aromatischen, aliphatischen oder araliphatischen Rest steht,
E für einen Rest eines Elements ausgewählt aus Bor, Aluminium, Gallium, Indium, Scandium, Yttrium steht, welcher mit zwei Halogenresten oder einem Rest ausgewählt aus Sauerstoff und Schwefel substituiert ist, und
$R^1$, $R^2$, $R^3$ unabhängig voneinander für Wasserstoff, Halogen, Cyano, Nitro, gegebenenfalls fluoriertes Alkoxy oder einen gegebenenfalls substituierten aromatischen, aliphatischen oder araliphatischen Rest stehen,

**dadurch gekennzeichnet, dass** der Farbstoff eine Wasseraufnahme von < 2 % aufweist, wobei die Wasseraufnahme bestimmt wird, indem jeweils 5-10 g der Farbstoffe in einer offenen Glasschale bei einem Druck von 200 mbar und einer Temperatur von 50 °C bis zur Massenkonstanz getrocknet, unter Feuchtigkeitsausschluss während 60 min auf Raumtemperatur abgekühlt werden und die Glasschalen luftdicht verschlossen gewogen werden, die Farbstoffe anschließend 7 Tage bei Raumtemperatur und einer relativen Luftfeuchtigkeit von 90 % bis zur Massenkonstanz stehen gelassen und gewogen werden und sich die Wasseraufnahme aus der Formel (F-1) ergibt

$$W = (m_f/m_t - 1)*100\% \quad (F-1),$$

worin $m_f$ die Masse des Farbstoffs nach Wassersättigung und $m_t$ die Masse des getrockneten Farbstoffs sind.

2. Photopolymer-Formulierung nach Anspruch 1 **dadurch gekennzeichnet, dass** A für N steht.

3. Photopolymer-Formulierung nach wenigstens einem der Ansprüche 1 oder 2 **dadurch gekennzeichnet, dass** E für einen substituierten Bor-Rest, bevorzugt einen zweifach halogensubstituierten Bor-Rest steht.

4. Photopolymer-Formulierung nach wenigstens einem der Ansprüche 1 bis 3 **dadurch gekennzeichnet, dass** $R^1$, $R^2$ und $R^3$ unabhängig voneinander für Wasserstoff, Halogen, Cyano, Nitro, gegebenenfalls fluoriertes Alkoxy oder einen gegebenenfalls halogensubstituierten aromatischen, aliphatischen oder araliphatischen Rest, bevorzugt unabhängig voneinander für Wasserstoff oder einen gegebenenfalls halogensubstituierten aromatischen Rest stehen.

5. Photopolymer-Formulierung nach wenigstens einem der Ansprüche 1 bis 4 **dadurch gekennzeichnet, dass** die Polyisocyanat-Komponente ein aliphatisches und/oder cycloaliphatisches Polyisocyanat oder ein Präpolymer mit primären NCO-Gruppen ist.

6. Photopolymer-Formulierung nach wenigstens einem der Ansprüche 1 bis 5 **dadurch gekennzeichnet, dass** die Polyolkomponente ein di- oder höherfunktioneller Polyether-, Polyester oder ein Polyether-polyester-block-copolyester mit primären OH-Funktionen ist.

7. Photopolymer-Formulierung nach wenigstens einem der Ansprüche 1 bis 6 **dadurch gekennzeichnet, dass** das Schreibmonomer wenigstens ein monofunktionelles und/oder ein multifunktionelles Urethan(meth)acrylat umfasst.

8. Photopolymer-Formulierung nach wenigstens einem der Ansprüche 1 bis 7 **dadurch gekennzeichnet, dass** der Photoinitiator wenigstens einen Coinitiator enthält.

9. Photopolymer-Formulierung nach wenigstens einem der Ansprüche 1 bis 8 **dadurch gekennzeichnet, dass** sie zusätzlich einen Weichmacher, bevorzugt einen Weichmacher gemäß der allgemeinen Formel (III)

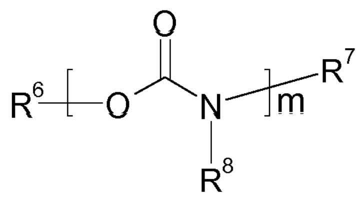

(III)

umfasst, in der $m \geq 1$ und $m \leq 8$ ist und $R^6$, $R^7$, $R^8$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^6$, $R^7$, $R^8$ mit wenigstens einem Fluoratom substituiert ist und besonders bevorzugt $R^6$ ein organischer Rest mit mindestens einem Fluoratom ist.

10. Holographisches Medium, insbesondere in Form eines Films, enthaltend eine Photopolymer-Formulierung gemäß wenigstens einem der Ansprüche 1 bis 9.

11. Verwendung eines holographischen Mediums gemäß Anspruch 10 zur Aufzeichnung von In-Line, Off-Axis, Full-Aperture Transfer, Weißlicht-Transmissions, Denisyuk, Off-Axis Reflektions oder Edge-Lit Hologrammen sowie holographischen Stereogrammen, insbesondere zur Herstellung von optischen Elementen, Bildern oder Bilddarstellungen.

12. Verfahren zur Herstellung eines holographischen Mediums gemäß Anspruch 10 unter Verwendung einer Photopolymer-Formulierung gemäß wenigstens einem der Ansprüche 1 bis 9.

## Claims

1. Photopolymer formulation comprising a polyol component, a polyisocyanate component, a writing monomer and a photoinitiator, **characterized in that** the photoinitiator contains a dye of general formula (I),

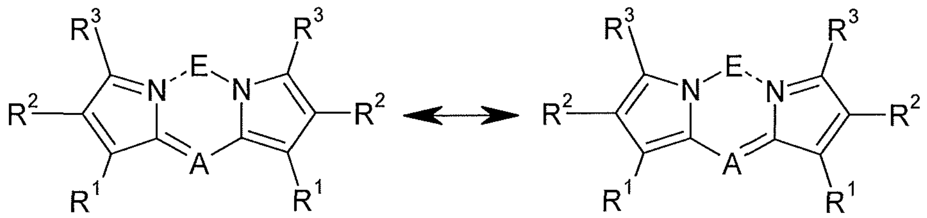

(I)

where

A represents N or C-$R^A$, where $R^A$ represents hydrogen or an optionally substituted aromatic, aliphatic or araliphatic radical,
E represents a radical derived from an element selected from boron, aluminium, gallium, indium, scandium and yttrium, and substituted with two halogen radicals or with one radical selected from oxygen and sulphur, and
$R^1$, $R^2$, $R^3$ each independently represent hydrogen, halogen, cyano, nitro, optionally fluorinated alkoxy or an optionally substituted aromatic, aliphatic or araliphatic radical, **characterized in that** the dye has a water inhibition of <2% wherein water imbibition is determined by drying 5-10 g of the dyes in each case in an open glass dish at a pressure of 200 mbar and a temperature of 50°C to constant mass, cooling down to room temperature during 60 min in the absence of moisture and sealing and weighing the glass dishes airtight, the dyes are then left to stand at room temperature and relative humidity of 90% for 7 days to constant mass and weighed and water imbibition is computed from formula (F-1)

$$W = (m_f/m_t - 1)*100\% \quad \text{(F-1)},$$

where $m_f$ is the mass of the dye after water saturation and $m_t$ is the mass of the dried dye

2. Photopolymer formulation according to Claim 1, **characterized in that** A represents N

3. Photopolymer formulation according to either or both of Claims 1 and 2, **characterized in that** E represents a substituted boron-derived radical, preferably a halogen-disubstituted boron-derived radical

4. Photopolymer formulation according to one or more of Claims 1 to 3, **characterized in that** $R^1$, $R^2$ and $R^3$ each independently represent hydrogen, halogen, cyano, nitro, optionally fluorinated alkoxy or an optionally halogen-substituted aromatic, aliphatic or araliphatic radical and preferably each independently represent hydrogen or an optionally halogen-substituted aromatic radical

5. Photopolymer formulation according to one or more of Claims 1 to 4, **characterized in that** the polyisocyanate component is an aliphatic and/or cycloaliphatic polyisocyanate or a prepolymer with primary NCO groups.

6. . Photopolymer formulation according to one or more of Claims 1 to 5, **characterized in that** the polyol component is an at least difunctional polyether, polyester or a polyether-polyester block copolyester with primary OH functions.

7. Photopolymer formulation according to one or more of Claims 1 to 6, **characterized in that** the writing monomer comprises one or more than one monofunctional and/or multifunctional urethane (meth)acrylate

8. . Photopolymer formulation according to one or more of Claims 1 to 7, **characterized in that** the photoinitiator contains one or more than one coinitiator.

9. Photopolymer formulation according to one or more of Claims 1 to 8, **characterized in that** it additionally comprises

a plasticizer, preferably a plasticizer conforming to general formula (III)

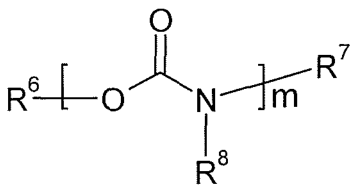

(III)

where m is ≥ 1 and ≤ 8 and $R^6$, $R^7$, $R^8$ are independently hydrogen, linear, branched, cyclic or heterocyclic unsubstituted or optionally heteroatom-substituted organic radicals, wherein preferably at least one of $R^6$, $R^7$, $R^8$ is substituted with at least a fluorine atom and more preferably $R^6$ is an organic radical comprising at least one fluorine atom.

**10.** Holographic medium, particularly in the form of a film, containing a photopolymer formulation according to one or more of Claims 1 to 9

**11.** Use of a holographic medium according to Claim 10 for recording in-line, off-axis, full-aperture transfer, white light transmissions, Denisyuk, off-axis reflection or edge-lit holograms and also holographic stereograms, particularly for production of optical elements, images or image presentations.

**12.** Process for producing a holographic medium according to Claim 10 by using a photopolymer formulation according to one or more of Claims 1 to 9

**Revendications**

**1.** Formulation de photopolymère comprenant un composant polyol, un composant polyisocyanate, un monomère d'enregistrement et un photo-initiateur, **caractérisé en ce que** le photo-initiateur contient un colorant de formule générale (I),

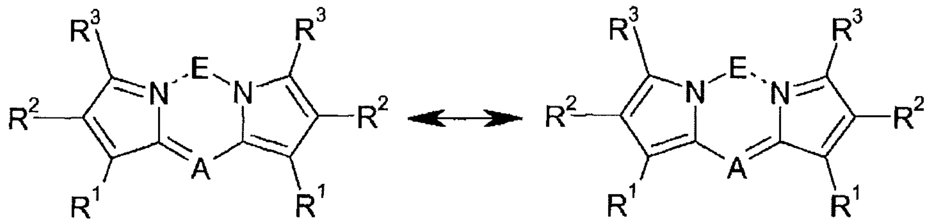

(I)

dans laquelle

A représente N ou C-$R^A$, $R^A$ représentant hydrogène ou un radical aromatique, aliphatique ou araliphatique le cas échéant substitué,
E représente un radical d'un élément choisi parmi le bore, l'aluminium, le gallium, l'indium, le scandium, l'yttrium, qui est substitué par deux radicaux halogène ou un radical choisi parmi oxygène et soufre, et
$R^1$, $R^2$, $R^3$ représentent, indépendamment les uns des autres, hydrogène, halogène, cyano, mtro, alcoxy le cas échéant fluoré ; ou un radical aromatique, aliphatique ou araliphatique le cas échéant substitué,

**caractérisé en ce que** le colorant présente une absorption d'eau < 2%, l'absorption d'eau étant déterminée **en ce qu'**on sèche à chaque fois 5-10 g des colorants dans une coupelle ouverte en verre à une pression de 200 mbars et à une température de 50°C jusqu'à poids constant, on refroidit à l'abri de l'humidité pendant 60 min à température ambiante et on pèse les coupelles en verre fermées de manière étanche à l'air, on laisse ensuite les colorants pendant 7 jours à température ambiante et à une humidité relative de l'air de 90% jusqu'à poids constant et on les pèse et un obtient l'absorption d'eau à partir de la formule (F-1)

$$W = (m_f/m_t-1) * 100\% \quad (F-1),$$

$m_f$ étant la masse du colorant après saturation en eau et mt étant la masse du colorant séché.

**2.** Formulation de photopolymère selon la revendication 1, **caractérisée en ce que** A représente N

**3.** Formulation de photopolymère selon au moins l'une quelconque des revendications 1 ou 2, **caractérisée en ce que** E représente un radical de bore substitué, de préférence un radical de bore disubstitué par halogène.

**4.** Formulation de photopolymère selon au moins l'une quelconque des revendications 1 à 3, **caractérisée en ce que** $R^1$, $R^2$ et $R^3$ représentent, indépendamment les uns des autres, hydrogène, halogène, cyano, nitro, alcoxy le cas échéant fluoré ; ou un radical aromatique, aliphatique ou araliphatique le cas échéant substitué par halogène ; de préférence, indépendamment les uns des autres, hydrogène ou un radical aromatique le cas échéant substitué par halogène.

**5.** Formulation de photopolymère selon au moins l'une quelconque des revendications 1 à 4, **caractérisée en ce que** le composant polyisocyanate est un polyisocyanate aliphatique et/ou cycloahphatique ou un prépolymère présentant des groupes NCO primaires.

**6.** Formulation de photopolymère selon au moins l'une quelconque des revendications 1 à 5, **caractérisée en ce que** le composant polyol est un polyéther, un polyester ou un copolyester séquencé de polyéther-polyester, difonctionnel ou à fonctionnalité supérieure, présentant des fonctions OH primaires.

**7.** Formulation de photopolymère selon au moins l'une quelconque des revendications 1 à 6, **caractérisée en ce que** le monomère d'enregistrement comprend au moins un uréthane-(méth)acrylate monofonctionnel et/ou au moins un uréthane-(méth)acrylate multifonctionnel

**8.** Formulation de photopolymère selon au moins l'une quelconque des revendications 1 à 7, **caractérisée en ce que** le photo-imtiateur contient au moins un co-initiateur

**9.** Formulation de photopolymère selon au moins l'une quelconque des revendications 1 à 8, **caractérisée en ce qu'**elle comprend en outre un plastifiant, de préférence un plastifiant selon la formule générale (III)

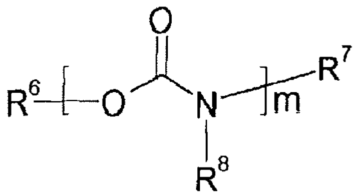
(III)

dans laquelle $m \geq 1$ et $m \leq 8$ et $R^6$, $R^7$, $R^8$ représentent, indépendamment les uns des autres, hydrogène, des radicaux organiques linéaires, ramifiés, cycliques ou hétérocycliques, non substitués ou le cas échéant également substitués par des hétéroatomes, au moins un des radicaux $R^6$, $R^7$, $R^8$ étant de préférence substitué par au moins un atome de fluor et $R^6$ représentant de manière particulièrement préférée un radical organique comprenant au moins un atome de fluor.

**10.** Support holographique, en particulier sous forme d'un film, contenant une formulation de photopolymère selon au moins l'une quelconque des revendications 1 à 9.

**11.** Utilisation d'un support holographique selon la revendication 10 pour l'enregistrement d'hologrammes en en ligne, hors axe, par transfert à ouverture complète (Full-Aperture Transfer), par transmission de lumière blanche, de Denisyuk, par réflexion hors axe ou par éclairage périphérique ainsi que de stéréogrammes holographiques, en particulier pour la réalisation d'éléments optiques, d'images optiques ou de représentations d'images optiques.

**12.** Procédé pour la fabrication d'un support holographique selon la revendication 10 avec utilisation d'une formulation

de photopolymère selon au moins l'une quelconque des revendications 1 à 9.

**Figur 1:**

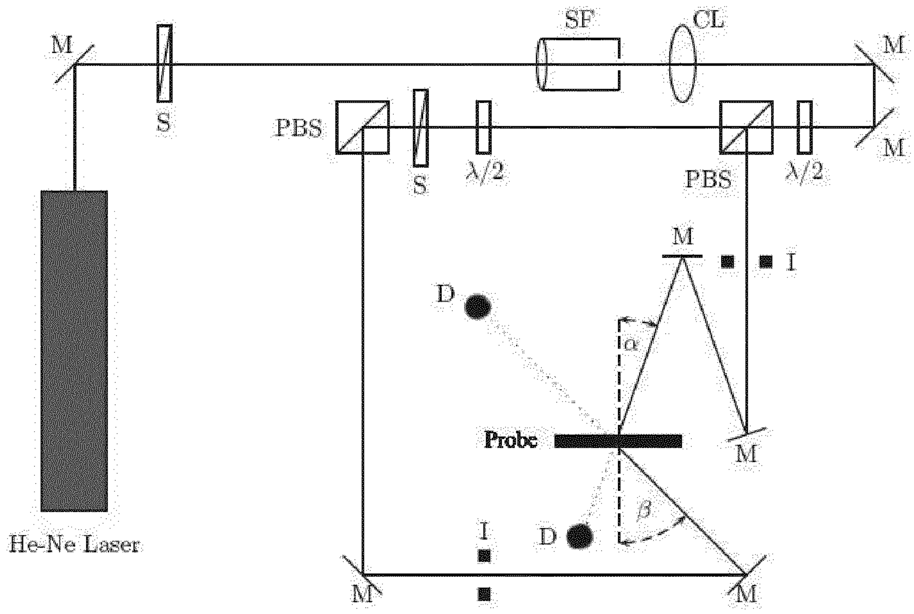

Figur 2:

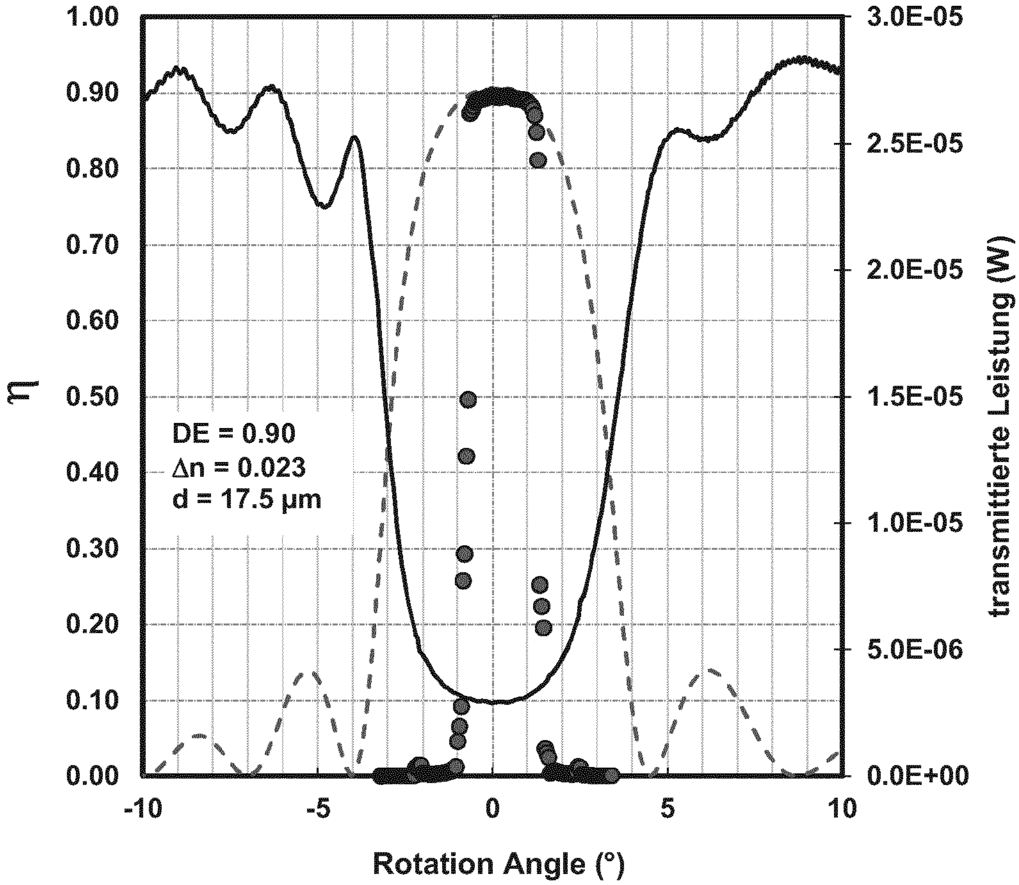
1.00
0.90
0.80
0.70
0.60
0.50
0.40
0.30
0.20
0.10
0.00
η
3.0E-05
2.5E-05
2.0E-05
1.5E-05
1.0E-05
5.0E-06
0.0E+00
transmittierte Leistung (W)
DE = 0.90
Δn = 0.023
d = 17.5 μm
-10
-5
0
5
10
Rotation Angle (°)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008125229 A1
- WO 2001054794 A
- EP 0223587 A


### In der Beschreibung aufgeführte Nicht-Patentliteratur


- **CUNNINGHAM et al.** *RadTech'98 North America UV/EB Conference Proceedings,* 19. April 1998
- **KUTAL et al.** *Macromolecules,* 1991, vol. 24, 6872
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings, Inks & Paints. SITA Technology, 1991, vol. 3, 61-328
- *IEEE Transactions on Electron Devices,* 1978, vol. ED-25 (10), 1193-1200
- **H. KOGELNIK.** *The Bell System Technical Journal,* November 1969, vol. 48 (9), 2909, , 2947
- **A. A. TOLMACHEV ; E. S. KOZLOV ; YU. L. SLOMONSKII.** *Zh. Obshch. Khim.,* 1989, vol. 59, 939